# EUROPÄISCHE PATENTSCHRIFT

(11) **EP 4 342 065 B1**
(45) Veröffentlichungstag und Bekanntmachung des Hinweises auf die Patenterteilung: **02.07.2025**
(21) Anmeldenummer: 22729550.8
(22) Anmeldetag: 16.05.2022
(51) Int. Cl.: H02N 2/02, H02N 2/10

(54) **2-DIMENSIONAL BEWEGBARER LINEAR- ODER ROTATIONSTISCH**
2-DIMENSIONALLY MOVABLE LINEAR OR ROTARY TABLE
TABLE À MOUVEMENT LINÉAIRE OU ROTATIF EN 2 DIMENSIONS

(30) Priorität: 17.05.2021 DE 102021112720
(43) Veröffentlichungstag der Anmeldung: 27.03.2024
(73) Patentinhaber: Physik Instrumente (PI) SE & Co. KG, 76228 Karlsruhe (DE)
(72) Erfinder: KOC, Burhanettin, 76228 Karlsruhe (DE); KAPELKE, Simon, 76228 Karlsruhe (DE)
(74) Vertreter: Grünecker Patent- und Rechtsanwälte PartG mbB
(86) Internationale Anmeldenummer: PCT/EP2022/063201
(87) Internationale Veröffentlichungsnummer: WO 2022/243249

(56) Entgegenhaltungen:
- EP-A2- 0 938 144
- JP-A- H07 226 354
- US-A1- 2013 222 899
- LIU YINGXIANG ET AL: "Review on Multi-Degree-of-Freedom Piezoelectric Motion Stage", IEEE ACCESS, vol. 6, 15 October 2018 (2018-10-15), pages 59986 - 60004, XP011698502, DOI: 10.1109/ACCESS.2018.2875940

## Beschreibung

Die vorliegende Erfindung betrifft einen 2-dimensional bewegbaren Linear- oder Rotationstisch mit einem Stator und mindestens einer oberen Läuferplatte, die gegenüber dem Stator in zwei unabhängige translatorische Richtungen oder zwei unabhängige rotatorische Richtungen bewegbar ist, sowie mindestens zwei piezoelektrischen Linearantrieben, um die obere Läuferplatte in den zwei translatorischen Richtungen oder zwei rotatorischen Richtungen zu bewegen.

Derartige 2-dimensional bewegbare Lineartische, Rotationstische oder Kipptische sind einfache und exakte Positionier- und Handhabungssysteme, die nicht nur in der Forschung und Entwicklung, sondern auch in der Industrie in der Verarbeitung und Produktion zum Einsatz kommen. Dabei reicht der Einsatz von industriellen Förderanlagen für die exakte Ausrichtung transportierter Produkte für eine anschließende Produkterkennung, Etikettierung, Beschriftung und Verpackung, bis hin zur hochpräzisen Positionierung von Vorrichtungen oder Proben in der Forschung und Entwicklung. Vor allem zeichnen sich solche Linear-, Rotations- oder Kipptische durch eine genaue Bewegung mit geringer Reibung und einer verformungsfreien Aufnahme von Querkräften aus. Die Verwendung von piezoelektrischen Linearantrieben ermöglicht dabei die Bewegung der Läuferplatte ohne eine mechanische Übersetzung des Antriebs, wodurch eine schnelle Ansprechgeschwindigkeit sowie eine hohe Steifigkeit und Dynamik des Antriebs erreicht wird. Hierbei werden wegen der linearen Bewegungsrichtung solcher piezoelektrischen Linearantriebe, d.h. der Vor- und Rückbewegung entlang einer Raumachse, für eine Positionierung der Läuferplatte in zwei unabhängige translatorische oder zwei unabhängige rotatorische Richtungen mindestens zwei piezoelektrische Linearantriebe benötigt. Die Bewegung der oberen Läuferplatte in zwei unabhängige translatorische oder zwei unabhängige rotatorische Richtungen bezieht sich auf die Bewegungsrichtungen eines starren Körpers im Raum in Richtung der sechs möglichen Freiheitsgrade, d.h. in drei voneinander unabhängigen Translationsrichtungen und drei unabhängigen Rotationsrichtungen um drei voneinander unabhängige Achsen, jeweils hin und zurück.

Für die Bewegung von Linear- oder Rotationstischen in zwei unabhängige translatorische oder zwei unabhängige rotatorische Richtungen werden die Tische in mehrere Ebenen aufgeteilt und die Schichten übereinander angeordnet. Typischerweise weist ein 2-dimensional bewegbarer Linear- oder Rotationstisch drei Schichten auf, wobei die obere Schicht die obere Läuferplatte ist, auf der zu transportierende Produkte oder Elemente angeordnet sind, und wobei die mittlere Schicht eine Kombination aus einem Stator der oberen Bewegungsebene und einem Läufer der unteren Bewegungsebene ist, und der Linearantrieb der oberen Bewegungsebene auf dieser mittleren Schicht positioniert ist, und wobei die untere Schicht schließlich die Grundplatte oder den Stator der unteren Bewegungsebene bildet. Wenn ein auf der Grundplatte angeordneter piezoelektrischer Linearantrieb der unteren Bewegungsebene die Läuferplatte der mittleren Schicht in einer unabhängigen Richtung bewegt, bewegen sich mit dieser mittleren Läuferplatte auch der darauf angeordnete zweite piezoelektrische Linearantrieb und die von diesem in einer zweiten unabhängigen Richtung bewegte obere Läuferplatte. Zusammen mit dem auf der mittleren Läuferplatte befestigten zweiten piezoelektrischen Linearantrieb müssen sich auch die Anschlussleitungen zur Versorgung des zweiten Linearantriebs bewegen. Gerade bei Anwendungen mit einer sehr hohen Genauigkeit zur exakten Positionierung von Elementen im Nanometerbereich, einer sehr hohen Linearität der Bewegung der oberen Läuferplatte und einer großen Langzeitstabilität der Positionierungsgenauigkeit und Bewegungslinearität kann die Anschlussleitung für den zweiten piezoelektrischen Linearantrieb die Bewegung der mittleren Läuferplatte in der unteren Bewegungsebene stören, insbesondere in Abhängigkeit der Steifigkeit der Anschlussleitung. Daher werden bei Linear- und Rotationstischen mit hohen Anforderungen an die Genauigkeit der Positionierung und Stabilität der Bewegungslinearität für den Anschluss der zweiten piezoelektrischen Linearantriebe Leitungsbänder verwendet, die in der Bewegungsrichtung der unteren Bewegungsebene eine nahezu vernachlässigbare Steifigkeit aufweisen. Aus der JP H 7-226354 A ist eine gattungsgemäße Positionierungsvorrichtung bekannt, die für die Herstellung von Halbleitern die eine präzise Positionierung eines XY-Tisches ermöglicht, selbst wenn sich die Temperaturverteilung eines optischen Pfads ändert und der Umgebungsdruck schwankt. Die EP 938 144 A2 hingegen offenbart eine Drucker-Trägerplatte mit einem Ultraschallmotor, einem ersten bewegbaren Körper und einem zweiten bewegbaren Körper, der sich in einer Richtung zusammen mit dem ersten Körper bewegt und in einer anderen Richtung, unabhängig vom ersten Körper, sowie mit einem piezoelektrischen Aktuator oder Ultraschallmotor, der mit dem ersten Körper verbunden ist. Das Dokument mit dem Titel "Review on Multi-Degree-of-Freedom Piezoelectric Motion Stage" von LIU YINGXIANG et al, in IEEE ACCESS, Bd. 6, publiziert am 5.10.2018, Seiten 59986-60004, DOI: 10.1109/ACCESS.2018.2875940 offenbart einen Forschungsbericht zu piezoelektrisch angetriebenen Bewegungstisch mit mehreren Freiheitsgraden, die für hochpräzise Bewegungen in einem großen Verfahrbereich eingesetzt werden. Neben den Hauptkomponenten und deren Funktionsweise werden hier auch die Funktionsprinzipien der verschiedenen Antriebsarten, Konstruktionsschemata und Strukturen der piezoelektrischen Bewegungstische beschrieben. Die US 2013/222899 A1 offenbart einen Probentisch für eine Gewebeprobe mit einem oberflächengekrümmten Fenster, einem Schlitten mit einem Gewebeprobenbehälter, an dem das Fenster montiert ist, und einer Plattform, die den Schlitten trägt, wobei der Schlitten entlang zweier Drehachsen auf der Plattform montiert ist, so dass die Bewegung des Schlittens der Krümmung des Fensters folgt.

Der vorliegenden Erfindung liegt daher die Aufgabe zugrunde, einen 2-dimensional bewegbaren Linear- oder Rotationstisch mit höchster Genauigkeit der Positionierung und herausragender Bewegungslinearität bereitzustellen.

Diese Aufgabe wird gemäß der vorliegenden Erfindung dadurch gelöst, dass eine mittlere Läuferplatte vorgesehen ist, wobei die mittlere Läuferplatte zwischen dem Stator und der oberen Läuferplatte angeordnet ist, und dass die mindestens zwei piezoelektrischen Linearantriebe, die die obere Läuferplatte jeweils in eine der zwei unabhängigen translatorischen oder zwei unabhängigen rotatorischen Richtungen bewegen, jeweils an dem Stator befestigt sind, um die obere Läuferplatte in den zwei translatorischen oder rotatorischen Richtungen zu bewegen, und wobei mindestens ein am Stator befestigter piezoelektrischer Linearantrieb durch eine Öffnung in der mittleren Läuferplatte hindurch mit der oberen Läuferplatte in Kontakt steht, um die obere Läuferplatte in einer ersten translatorischen oder rotatorischen Richtung zu bewegen. Dabei sind diese mindestens zwei piezoelektrischen Linearantriebe voneinander unabhängig und als vollständig separate Linearantriebe ausgebildet. Die Anordnung aller piezoelektrischen Linearantriebe zur 2-dimensionalen Bewegung der oberen Läuferplatte an der Grundplatte bzw. dem Stator des Linear- oder Rotationstischs ermöglicht einen Verzicht auf eine bewegbare Anschlussleitung für den zweiten Linearantrieb und vermeidet so auch geringste Beeinflussungen der Positionierung und Bewegungslinearität der oberen Läuferplatte.

Das Vorsehen einer mittleren Läuferplatte und deren Anordnung in einer Bewegungsebene zwischen dem Stator und der oberen Läuferplatte ermöglicht einen konstruktiv einfachen Aufbau eines erfindungsgemäßen Linear- oder Rotationstischs. Dabei sind die mittlere Läuferplatte und die obere Läuferplatte derart angeordnet, dass sie sich gemeinsam in einer zweiten translatorischen oder rotatorischen Richtung gegenüber dem Stator bewegen, und die obere Läuferplatte sich gegenüber der mittleren Läuferplatte nur in der ersten translatorischen oder rotatorischen Richtung bewegt. Hierzu kann ein am Stator befestigter zweiter piezoelektrischer Linearantrieb entweder mit der mittleren Läuferplatte in Kontakt stehen, um die mittlere Läuferplatte direkt und die obere Läuferplatte mittelbar in der zweiten translatorischen oder rotatorischen Richtung zu bewegen, oder alternativ durch die Öffnung in der mittleren Läuferplatte hindurch direkt mit der oberen Läuferplatte in Kontakt stehen, um die obere Läuferplatte direkt und die mittlere Läuferplatte indirekt in der zweiten translatorischen oder rotatorischen Richtung zu bewegen.

Obwohl die mindestens zwei piezoelektrischen Linearantriebe sich jeweils nur in einer linearen Bewegungsrichtung bewegen können, sind mit der erfindungsgemäßen Ausgestaltung 2-dimensional bewegbare Linear- oder Rotationstische mit einer Positionsgenauigkeit im Sub-Nanometerbereich und höchster Bewegungslinearität bei guter Langzeitstabilität möglich. Dabei sind die zwei piezoelektrischen Linearantriebe gegenüber der Läuferplatte vorzugsweise federnd angeordnet, um eine sichere Übertragung der Bewegung in den zwei unabhängigen translatorischen oder rotatorischen Richtungen auf die obere Läuferplatte zu gewährleisten.

Zweckmäßigerweise sind die mindestens zwei am Stator befestigten piezoelektrischen Linearantriebe in einem Winkel zueinander angeordnet und bevorzugt in einem Winkel von 90° zueinander angeordnet. Die Anordnung der mindestens zwei piezoelektrischen Linearantriebe im Winkel zueinander, wobei die Orientierung der Anordnung der piezoelektrischen Linearantriebe am Stator jeweils der Bewegungsrichtung der Linearantriebe entspricht, insbesondere den Achsen der zwei unabhängigen translatorischen Richtungen oder senkrecht zu den Achsen der zwei unabhängigen rotatorischen Richtungen, ermöglicht eine sichere, schlupffreie Übertragung der Bewegung der am Stator angeordneten piezoelektrischen Linearantriebe auf die obere Läuferplatte.

Eine bevorzugte Ausführungsform sieht vor, dass eine Führung der oberen Läuferplatte vorgesehen ist, um die obere Läuferplatte relativ zu dem Stator in mindestens einer, bevorzugt zwei, translatorischen oder rotatorischen Richtungen zu führen. Eine solche Führung der oberen Läuferplatte in der Richtung der Bewegung der oberen Läuferplatte ermöglicht eine genaue Positionierung und Bewegungslinearität der oberen Läuferplatte und gleichzeitig eine hohe Stabilität des 2-dimensional bewegbaren Linear- oder Rotationstischs.

Eine sinnvolle Ausgestaltung sieht vor, dass zwischen dem Stator und der mittleren Läuferplatte und zwischen der mittleren Läuferplatte und der oberen Läuferplatte jeweils eine Führung vorgesehen ist, um die obere Läuferplatte relativ zu dem Stator in mindestenszwei unabhängigen translatorischen oder rotatorischen Richtungen zu führen. Eine solche Führung in Richtung der zwei unabhängigen translatorischen oder rotatorischen Bewegungsrichtungen der mittleren Läuferplatte bzw. der oberen Läuferplatte sichert eine genaue Positionierung und Ausrichtung der oberen Läuferplatte und verbessert die Stabilität des erfindungsgemäßen Linear- oder Rotationstischs.

Eine günstige Variante sieht vor, dass die Führungen zwischen dem Stator und der mittleren Läuferplatte und/oder die Führung zwischen der mittleren Läuferplatte und der oberen Läuferplatte als Führungsschienen ausgebildet sind, wobei die Führungsschienen bevorzugt jeweils an zwei gegenüberliegenden Seiten des Stators und/oder der mittleren Läuferplatte bzw. der mittleren Läuferplatte und/oder der oberen Läuferplatte vorgesehen sind. Dies ermöglicht eine besonders steife Konstruktion und damit auch bei höheren Dynamiken und schnellen Ansprechgeschwindigkeiten eine unverändert hohe Positionier- und Wiederholgenauigkeit.

Weiterhin ist es von Vorteil, wenn die obere Läuferplatte und/oder die mittlere Läuferplatte eine federnde Kraftaufnahmeeinrichtung zur Aufnahme einer Antriebskraft der piezoelektrischen Linearantriebe aufweist. Eine solche federnde Kraftaufnahmeeinrichtung ermöglicht eine einfache Wartung und Austausch der Kraftaufnahmeeinrichtung, ohne die mindestens zwei am Stator befestigten piezoelektrischen Linearantriebe zu demontieren. Weiterhin ermöglicht eine solche federnde Kraftaufnahmeeinrichtung eine Haftreibung zwischen dem piezoelektrischen Linearantrieb und der oberen Läuferplatte und/oder der mittleren Läuferplatte gezielt einzustellen.

Eine nützliche Ausbildung sieht vor, dass die mindestens zwei piezoelektrischen Linearantriebe als mindestens zwei piezoelektrische Reibkontaktantriebe ausgebildet sind. Reibkontaktantriebe erlauben eine sichere Bewegung der mittleren Läuferplatte und der oberen Läuferplatte in den zwei translatorischen oder rotatorischen Richtungen. Dabei können die mindestens zwei piezoelektrischen Reibkontaktantriebe jeweils mindestens ein als Friktionselement ausgebildetes Antriebselement aufweisen, wobei die Friktionselemente mit der oberen Läuferplatte oder mit der mittleren Läuferplatte und der oberen Läuferplatte in Reibkontakt stehen, um die obere Läuferplatte in den zwei translatorischen Richtungen oder zwei rotatorischen Richtungen zu bewegen. Solche Friktionselemente können in einfacher Weise an die obere Läuferplatte oder die obere und mittlere Läuferplatte gedrückt werden, um mittels einer simplen Konstruktion eine sichere Bewegung der mittleren Läuferplatte und der oberen Läuferplatte in den zwei translatorischen oder rotatorischen Richtungen zu ermöglichen. Zudem haben solche Reibkontaktantriebe den Vorteil, dass sie im energielosen Zustand durch den bestehenden Friktionskontakt mit der entsprechenden Läuferplatte deren aktuelle Position halten und somit selbsthemmend wirken.

Eine besondere Ausführung sieht vor, dass die mindestens zwei piezoelektrischen Linearantriebe als mindestens zwei gekapselte piezoelektrische Linearantriebe ausgebildet sind, und insbesondere als gekapselte piezoelektrische Trägheits- oder Resonanzantriebe ausgebildet sind. Derartige gekapselte piezoelektrische Linearantriebe ermöglichen einen Schutz der eigentlichen ein elektromechanisches Material aufweisenden Aktuatoren, die durch eine elektrische Ansteuerung verformt werden, um eine lineare Bewegung des Antriebs zu erzeugen, vor Umgebungseinflüssen innerhalb des erfindungsgemäßen Linear- oder Rotationstischs. Dabei werden insbesondere die empfindlichen Kontaktstellen zwischen den Elektroden der piezoelektrischen Linearantriebe und den eigentlichen Aktuatoren nicht durch Feuchtigkeit, Staub, Abrieb oder Schmierstoffe verschmutzt. Infolgedessen ergeben sich deutlich geringere Abnutzungs- oder Verschleißerscheinungen an diesen Kontaktstellen, was die Lebensdauer der piezoelektrischen Linearantriebe und damit des Linear- und des Rotationstischs deutlich erhöht.

Vorteilhafterweise können die gekapselten piezoelektrischen Linearantriebe ein Gehäuse, mindestens zwei innerhalb des Gehäuses angeordnete und ein elektromechanisches Material aufweisende Aktuatoren, die jeweils bei der Anregung mit einer elektrischen Steuerspannung eine Auslenkung erzeugen, und ein außerhalb des Gehäuses angeordnetes Antriebselement aufweisen, wobei ein elastischer Wandabschnitt des Gehäuses, der durch die Auslenkung der Aktuatoren elastisch verformt wird, die Aktuatoren und das Antriebselement derart miteinander koppelt, dass das Antriebselement durch die Auslenkung der Aktuatoren in Bewegung versetzt wird. Der elastische Wandabschnitt des Gehäuses wird dabei durch die Auslenkung der Aktuatoren elastisch verformt. Durch den elastischen Wandabschnitt, der beispielsweise als Membran ausgeführt sein kann, kann einerseits die Schutzfunktion des Gehäuses uneingeschränkt erhalten bleiben, während andererseits die von den Aktuatoren erzeugte Auslenkung direkt auf das außerhalb des Gehäuses angeordnete Antriebselement des gekapselten piezoelektrischen Linearantriebs übertragen wird. Dabei ist es von Vorteil, wenn das Antriebselement unter Zwischenschaltung des elastischen Wandabschnitts des Gehäuses federnd gegenüber den Aktuatoren vorgespannt ist. Durch die federnde Vorspannung werden sowohl die Aktuatoren, als auch das Antriebselement in einem engen und direkten Kontakt mit dem elastischen Wandabschnitt gehalten. Die Kraftübertragung zwischen den Aktuatoren und dem Antriebselement erfolgt damit zwar mittelbar, aber trotzdem direkt, und unter weitgehender Ausschaltung störender Einflüsse.

Ein nützliches Ausführungsbeispiel sieht vor, dass das Gehäuse aus zwei oder mehr Gehäuseteilen besteht, wobei die Gehäuseteile vorzugsweise unter Zwischenschaltung wenigstens eines Dichtungselements miteinander verbunden sind, insbesondere hermetisch dicht miteinander verbunden sind, wobei das Dichtungselement bevorzugt aus Epoxidharz, einem Klebstoff oder einem gummielastischen Material besteht. Dadurch können beim Einbau und Ausbau der Aktuatoren in bzw. aus dem Gehäuse die verschiedenen Gehäuseteile bedarfsweise verbunden oder getrennt werden, wobei die Aktuatoren in einem verschlossenen Zustand des Gehäuses kraftschlüssig im Gehäuse fixiert sind, vorzugsweise zwischen den miteinander verbundenen Gehäuseteilen eingeklemmt sind.

Eine bevorzugte Ausgestaltung sieht vor, dass ein erstes Gehäuseteil als eine vorzugsweise ebene Platte und ein zweites Gehäuseteil als ein durch die ebene Platte verschließbarer, offener Hohlkörper mit einer Kavität zur Aufnahme der Aktuatoren ausgebildet ist, wobei vorzugsweise der offene Hohlkörper den elastischen Wandabschnitt, der in einem eingeschlossenen Zustand des Gehäuses parallel zum ersten Gehäuseteil ausgerichtet ist, umfasst. Dadurch können die beiden Gehäuseteile optimal zueinander abgedichtet werden, insbesondere durch einen einfachen Dichtungsring. Weiter eignet sich die ebene Platte hervorragend zur Anbringung oder zum Einbinden von flachen Leitungsstrukturen, während der offene Hohlkörper für sich genommen eine eigene räumliche Stabilität aufweist und eine entsprechende mechanische Schutzfunktion für die Aktuatoren bildet. Dies gilt insbesondere auch für den elastischen Wandabschnitt, der zweckmäßigerweise als Teil des Hohlkörpers ausgebildet ist. Zusätzlich kann in einer derartigen Konstruktion auch eine Wärmesenke vorgesehen sein, beispielsweise als Teil der ebenen Platte, um die bei einer Auslenkung der Aktuatoren erzeugte Abwärme sicher aus dem Gehäuse abzuleiten.

Eine weitere Ausbildung sieht vor, dass die gekapselten piezoelektrischen Linearantriebe eine elektrische Leiterstruktur mit gehäuseinnenseitigen Anschlussstellen und gehäuseaußenseitigen Anschlussstellen aufweisen, die durch Leiterbahnen verbunden sind, wobei die Aktuatoren an die gehäuseinnenseitigen Anschlussstellen elektrisch angeschlossen sind, vorzugsweise durch elektrisch leitenden Klebstoff, wobei die gehäuseaußenseitigen Anschlussstellen bevorzugt zum festen Anschluss an eine Steuereinrichtung zur Ansteuerung der Aktuatoren ausgebildet sind. Alternativ kann der Anschluss an eine Steuereinrichtung auch mit einer flexiblen Leiterplatte oder mit elektrisch leitenden Pins für einen Schleifkontakt mit einer Stromschiene verbunden sein. Die elektrische Leiterstruktur kann, beispielsweise durch Ätzung, aus einer elektrisch leitenden Folie herausgearbeitet werden, die zuvor auf einer Gehäuseplatte aufgebrachten wurde. Derartige Leiterstrukturen sind sehr flach und können an einer hermetisch abgedichteten Oberfläche durch eine Dichtungsebene hindurch verlaufen. Eine ebene Platte mit einer derart aufgebrachten elektrischen Leitungsstruktur eignet sich insbesondere als erstes Gehäuseteil, wobei die auf einer solchen Leiterplatte angebrachten Aktuatoren durch ein als zweites Gehäuseteil ausgebildeten offenen Hohlkörper mit elastischer Membran, abgedeckt werden können.

Es kann von Vorteil sein, wenn sich die gehäuseinnenseitigen Anschlussstellen und die gehäuseaußenseitigen Anschlussstellen und gegebenenfalls die Leiterbahnen in derselben Ebene erstrecken, vorzugsweise auf einer dem zweiten Gehäuseteil zugewandten Seite des ersten Gehäuseteils. Dabei ist es nützlich, wenn die Leiterstruktur fest mit dem Gehäuse, insbesondere mit dem ersten Gehäuseteil verbunden ist, da in dieser Konstruktion vorstehende Leitungsdrähte oder Anschlussstellen, die bei eingeschränkten Platzverhältnissen schwierig aufzunehmen sind, vermieden werden.

Eine praktische Variante sieht vor, dass die gekapselten piezoelektrischen Linearantriebe einen Träger und eine das Gehäuse gegen den Träger drängende Federeinrichtung aufweisen, wobei das Antriebselement vorzugsweise auf der Federeinrichtung angeordnet ist. Bei dieser Form eines erfindungsgemäßen Linear- oder Rotationstischs werden die durch das Gehäuse der piezoelektrischen Linearantriebe aufgenommenen Aktuatoren und das von den Aktuatoren angetriebene Antriebselement der piezoelektrischen Linearantriebe sicher zueinander positioniert.

Sinnvollerweise kann der Träger und die Federeinrichtung einen das Gehäuse umschließenden Rahmen ausbilden, wobei die Federeinrichtung vorzugsweise als ein das Gehäuse überspannendes Federelement ausgebildet ist. Das Federelement kann dabei sowohl einseitig als auch beidseitig des Gehäuses mit dem Träger verbunden sein. Diese besondere Ausgestaltung und Anordnung eines Federelements ermöglicht eine besonders kompakte und stabile Ausführung eines piezoelektrischen Linearantriebs für einen Linear- oder Rotationstisch.

Desweiteren bezieht sich die vorliegende Erfindung auf ein Verfahren zum Bewegen eines 2-dimensional bewegbaren Linear- oder Rotationstischs, bevorzugt nach einer der zuvor beschriebenen Ausführungsformen. Der Linear- oder Rotationstisch umfasst dabei einen Stator, mindestens eine obere Läuferplatte, die sich gegenüber dem Stator in zwei unabhängigen translatorischen Richtungen oder zwei unabhängigen rotatorischen Richtungen bewegt, eine mittlere Läuferplatte, die zwischen dem Stator und der oberen Läuferplatte angeordnet ist, sowie mindestens zwei, bevorzugt vier, an dem Stator befestigte piezoelektrische Linearantriebe, um die obere Läuferplatte in den zwei translatorischen Richtungen oder zwei rotatorischen Richtungen zu bewegen, wobei mindestens einam Stator befestigter piezoelektrischer Linearantrieb durch eine Öffnung in der mittleren Läuferplatte hindurch mit der oberen Läuferplatte in Kontakt steht und die obere Läuferplatte in einer ersten translatorischen Richtung oder einer ersten rotatorischen Richtung bewegt, und wobei für das Bewegen der oberen Läuferplatte in einer oder in beiden unabhängigen translatorischen Richtungen bzw. in einer oder in beiden unabhängigen rotatorischen Richtungen die einzelnen Bewegungsbeiträge aller am Stator befestigter piezoelektrischer Linearantriebe addiert oder entsprechend der Vorzeichen der Bewegungsbeiträge subtrahiert werden. Ein solches Verfahren ermöglicht eine sichere, schlupffreie Übertragung der einzelnen Bewegungsbeiträge der am Stator angeordneten piezoelektrischen Linearantriebe auf die obere Läuferplatte. Es ist besonders bevorzugt, dass zwei am Stator befestigte piezoelektrische Linearantriebe durch die Öffnung in der mittleren Läuferplatte hindurch mit der oberen Läuferplatte in Kontakt stehen, um diese in einer ersten translatorischen Richtung oder einer ersten rotatorischen Richtung zu bewegen.

Dabei kann es vorteilhaft sein, wenn die mindestens zwei, bevorzugt vier, am Stator befestigten piezoelektrischen Linearantriebe in einem Winkel, bevorzugt in einem Winkel von 45°, zu den zwei translatorischen Richtungen oder zu den Projektionen der zwei rotatorischen Richtungen in die Statorebene geneigt sind, wobei für das Bewegen der oberen Läuferplatte in einer der unabhängigen translatorischen Richtungen bzw. in einer der unabhängigen rotatorischen Richtungen alle am Stator befestigten piezoelektrischen Linearantriebe einen substantiellen positiven oder negativen Bewegungsbeitrag liefern. Durch eine elektrische Anregung aller piezoelektrischen Linearantriebe, um die obere Läuferplatte in lediglich einer translatorischen oder rotatorischen Richtung zu bewegen, kann die ansonsten beim Anfahren und während der Bewegung auftretende Reibungshemmung zwischen dem Antriebselement eines nicht aktuierten piezoelektrischen Linearantriebs und der oberen Läuferplatte verhindert oder zumindest deutlich reduziert werden.

Alternativ können bei einem Verfahren zum Bewegen eines 2-dimensional bewegbaren Linear- oder Rotationstischs, bei dem die mindestens zwei, bevorzugt vier, am Stator befestigten piezoelektrischen Linearantriebe parallel zu den zwei translatorischen Richtungen oder zu den Projektionen der zwei rotatorischen Richtungen in die Statorebene angeordnet sind, und bei dem mindestens ein piezoelektrischer Linearantrieb, der für das Bewegen der oberen Läuferplatte in ausschließlich einer der unabhängigen translatorischen Richtungen bzw. in ausschließlich einer der unabhängigen rotatorischen Richtungen keinen Bewegungsbeitrag liefert, die mindestens zwei Aktuatoren dieses mindestens einen piezoelektrischen Linearantriebs mit einem gleichen Spannungssignal, bevorzugt einem sinusförmigen oder sägezahnförmigen Spannungssignal, d.h. mit einer phasengleichen Ansteuerung der beiden einander entgegenwirkenden Aktuatoren, angesteuert werden, um beim Starten und während der Bewegung die auftretende Reibungshemmung zwischen dem Antriebselement dieses einen piezoelektrischen Linearantriebs und der oberen Läuferplatte zu reduzieren.

Im Folgenden werden nicht näher einschränkende Ausführungsform der Erfindung anhand beispielhafter Zeichnungen im Detail erläutert. Es zeigen:
- Fig. 1: eine perspektivische Explosionsansicht verschiedener Komponenten einer Antriebsvorrichtung eines piezoelektrischen Linearantriebs für einen erfindungsgemäßen Linear- oder Rotationstisch,
- Fig. 2: perspektivische Ansichten einer Baugruppe der Antriebsvorrichtung aus Fig. 1, wobei die Aktuatoren der Antriebsvorrichtung auf einer ebenen und mit einer Leitungsstruktur versehenen Gehäuseplatte angeordnet sind, wobei Ansicht (a) die Baugruppe von einer ersten Seite und Ansicht (b) die Baugruppe von einer zweiten Seite zeigt,
- Fig. 3: perspektivische Ansichten der Antriebsvorrichtung aus Fig. 1, wobei die Aktuatoren in dem Gehäuse aufgenommen sind, wobei Ansicht (a) eine perspektivische Schnittansicht der Baugruppe und Ansicht (b) eine perspektivische Seitenansicht der Baugruppe einschließlich einer angeschlossen flexiblen Leiterplatte zeigt,
- Fig. 4: eine perspektivische Explosionsansicht eines piezoelektrischen Linearantriebs mit der Antriebsvorrichtung aus Fig. 1,
- Fig. 5: perspektivische Ansichten des piezoelektrischen Linearantriebs aus Fig. 4 in einem montierten Zustand, wobei Ansicht (a) eine perspektivische Seitenansicht des piezoelektrischen Linearantriebs und Ansicht (b) eine perspektivische Schnittansicht des piezoelektrischen Linearantriebs aus einer ähnlichen Blickrichtung zeigt,
- Fig. 6: verschiedene Schnittansichten eines herkömmlichen 2-dimensional bewegbaren Lineartischs, wobei Ansicht (a) eine perspektivische Schnittansicht und Ansicht (b) eine vorderseitige Schnittansicht zeigt, jeweils in einer senkrecht zu einer der translatorischen Bewegungsrichtung angeordneten Schnittebene,
- Fig. 7: eine perspektivische Explosionsansicht eines zweiten piezoelektrischen Linearantriebs für einen erfindungsgemäßen Linear- oder Rotationstisch mit einem anderen Federelement,
- Fig. 8: perspektivische Ansichten des piezoelektrischen Linearantriebs aus Fig. 7 in einem montierten Zustand, wobei Ansicht (a) eine perspektivische Außenansicht des Linearantriebs und Ansicht (b) eine perspektivische Schnittansicht des Linearantriebs zeigt, jeweils aus ähnlicher Blickrichtung,
- Fig. 9: eine perspektivische Ansicht eines herkömmlichen Linear- oder Rotationstischs mit dem piezoelektrischen Linearantrieb aus Fig. 8, wobei Ansicht (a) den Lineartisch und Ansicht (b) den piezoelektrischer Linearantrieb aus Fig. 8 zeigt.
- Fig. 10: eine perspektivische Seitenansicht des Lineartischs aus Fig. 9 in einem montierten Zustand,
- Fig. 11: eine perspektivische Ansicht einer ersten Ausführungsform eines erfindungsgemäßen 2-dimensional bewegbaren Linear- oder Rotationstisch mit einem piezoelektrischen Linearantrieb nach Fig. 8,
- Fig. 12: eine perspektivische Explosionsansicht des Linear- oder Rotationstisch aus Fig. 11,
- Fig. 13: eine zweite perspektivische Explosionsansicht des Linear- oder Rotationstisch aus Fig. 11,
- Fig. 14: eine perspektivische Ansicht einer zweiten Ausführungsform eines erfindungsgemäßen 2-dimensional bewegbaren Linear- oder Rotationstischs,
- Fig. 15: eine perspektivische Explosionsansicht des Linear- oder Rotationstisch aus Fig. 14.
- Fig. 16: eine Draufsicht auf den Linear- oder Rotationstisch aus Fig. 14 ohne obere Läuferplatte,
- Fig. 17: eine perspektivische Explosionsansicht einer zweiten Variante des erfindungsgemäßen Linear- oder Rotationstisch aus Fig. 14,
- Fig. 18: eine Draufsicht auf die zweite Variante des Linear- oder Rotationstischs aus Fig. 17 ohne obere und mittlere Läuferplatten,
- Fig. 19: eine perspektivische Explosionsansicht einer dritten Variante des erfindungsgemäßen Linear- oder Rotationstischs aus Fig. 14,
- Fig. 20: eine Draufsicht auf die dritte Variante des Linear- oder Rotationstischs aus Fig. 19 ohne obere Läuferplatte,
- Fig. 21: eine perspektivische Ansicht einer dritten Ausführungsform eines erfindungsgemäßen 2-dimensional bewegbaren Linear- oder Rotationstischs,
- Fig. 22: eine perspektivische Explosionsansicht des Linear- oder Rotationstischs aus Fig. 21,
- Fig. 23: eine teilweise frei geschnittene perspektivische Ansicht des Linear- oder Rotationstischs aus Fig. 21,
- Fig. 24: eine perspektivische Ansicht der oberen Läuferplatte des Linear- oder Rotationstischs aus Fig. 21,
- Fig. 25: eine perspektivische Ansicht einer vierten Ausführungsform eines erfindungsgemäßen 2-dimensional bewegbaren Linear- oder Rotationstischs,
- Fig. 26: eine perspektivische Explosionsansicht des Linear- oder Rotationstischs aus Fig. 25,
- Fig. 27: eine teilweise frei geschnittene perspektivische Ansicht des Linear- oder Rotationstischs aus Fig. 25,
- Fig. 28: eine perspektivische Ansicht der oberen Läuferplatte des Linear- oder Rotationstischs aus Fig. 25,

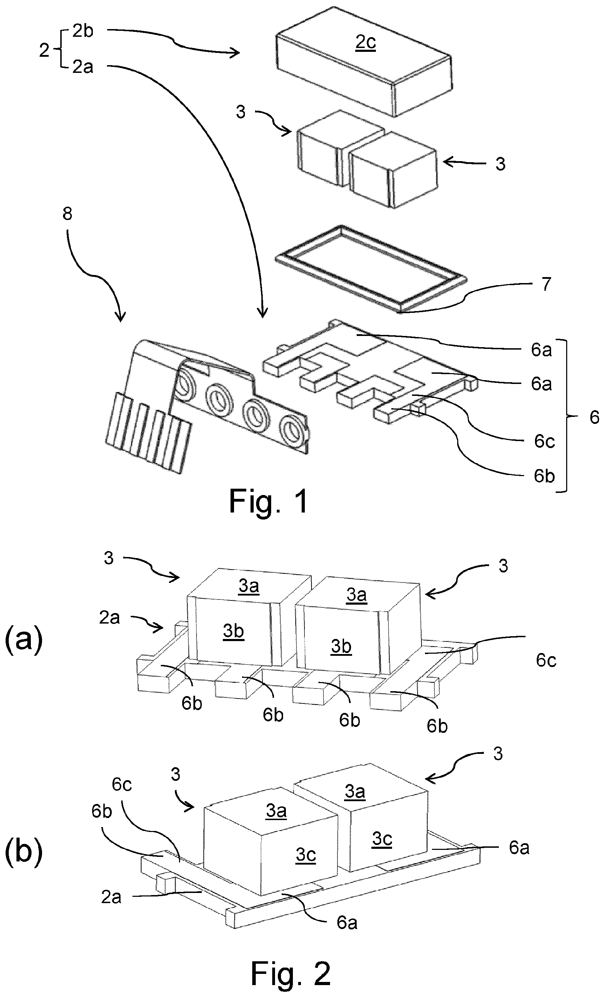

In den Figuren 1 bis 10 werden verschiedene gekapselte piezoelektrische Linearantriebe sowie deren Verwendung in herkömmlichen Linear- oder Rotationstischen beschrieben, wobei diese gekapselten piezoelektrischen Linearantriebe bevorzugt auch in den verschiedenen Ausführungsformen der erfindungsgemäßen 2-dimensional bewegbaren Linear- oder Rotationstischen zum Einsatz kommen, um trotz eines über die Bewegungsebenen dieser erfindungsgemäßen Linear- oder Rotationstische hinweg offenen Aufbau eine von den Umgebungsbedingungen unabhängigen robusten Betrieb mit hoher Positionsgenauigkeit und Stabilität zu ermöglichen. Wie in Fig. 1 zu erkennen, umfassen solche piezoelektrischen Linearantriebe 1 identische elektromechanische Aktuatoren 3, die näherungsweise würfelförmig ausgebildet sind und aus einer Vielzahl abwechselnd angeordneter piezoelektrischer Schichten und Schichtelektroden bestehen (sog. Multilayeraufbau). Die Schichtelektroden zwischen den piezoelektrischen Schichten sind abwechselnd mit Seitenelektroden 3b, 3c unterschiedlicher Polarität verbunden, die sich an den vorderen und hinteren Stirnseiten der Aktuatoren 3 angeordnet sind. Es ist jedoch ebenfalls denkbar, Aktuatoren zu verwenden, die nur an ihrer Ober- und Unterseite bzw. an zwei gegenüberliegenden Seiten Elektroden aufweisen und somit keine inneren Elektroden wie bei einem Multilayeraufbau vorhanden sind. Bei solchen Aktuatoren sind hingegen höhere elektrische Spannungen für deren Ansteuerung notwendig.

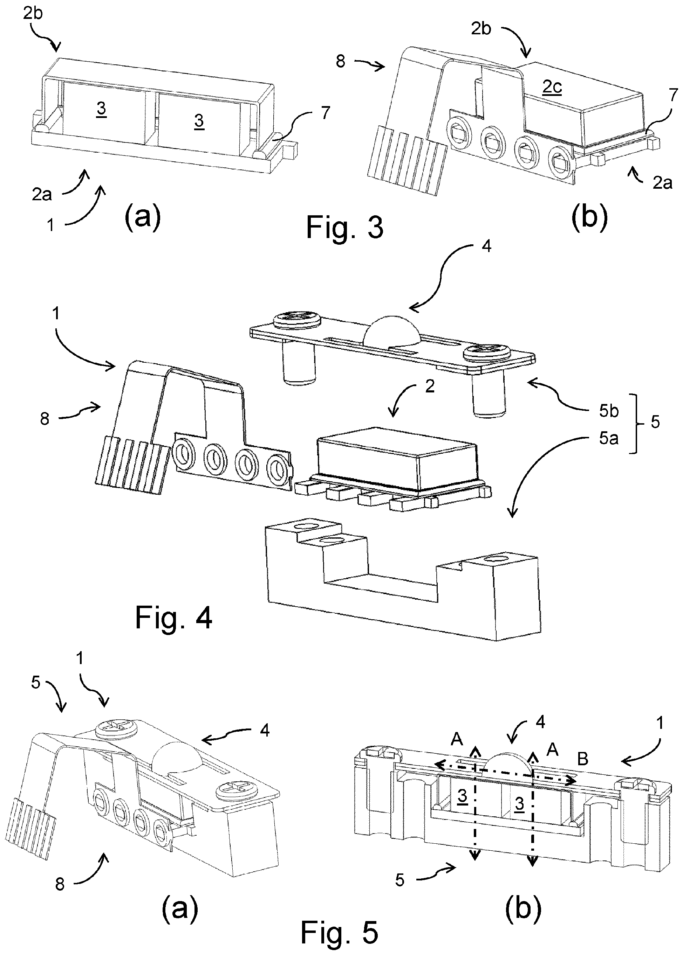

Die Aktuatoren 3 sind spiegelsymmetrisch nebeneinander in einem hermetisch abgedichteten Gehäuse 2 angeordnet und können über eine Leiterstruktur 6 von außerhalb des Gehäuses 2 mit elektrischen Steuerspannungen beaufschlagt werden. Das Gehäuse 2 umfasst als Gehäuseunterteil 2a eine ebene, im Wesentlichen rechteckige Platte, auf deren Oberseite sich die Leiterstruktur 6 zum elektrischen Anschluss der Aktuatoren 3 befindet. Diese Leiterstruktur 6 umfasst gehäuseinnenseitige Anschlussstellen 6a für die Seitenelektroden 3b, 3c der Aktuatoren 3 sowie gehäuseaußenseitige Anschlussstellen 6b. Die an der Außenseite des Gehäuses 2 vorgesehenen Anschlussstellen 6b und die gehäuseinnenseitigen Anschlussstellen 6a sind über zwischenliegende Leiterbahnen 6c miteinander verbunden. Das Gehäuseoberteil 2b ist im vorliegenden Fall als offener Hohlkörper in Gestalt eines quaderförmigen Deckels ausgebildet. Dieser Gehäusedeckel definiert im Inneren eine Aufnahme oder Kavität für die beiden Aktuatoren 3. Zwischen dem Gehäuseunterteil 2a und dem Gehäuseoberteil 2b befindet sich ein umlaufender Dichtungsring 7. Anstelle eines gegenständlichen Dichtungsrings 7 können die beiden Gehäuseteile 2a, 2b auch über einen aushärtenden Klebstoff verbunden und abgedichtet sein. Im Montagezustand, der nachstehend mit Bezug auf die Figuren 3 bis 5 erläutert wird, sind das Gehäuseunterteil 2a und das Gehäuseoberteil 2b unter Einklemmung des Dichtungsrings 7 gegeneinandergedrückt, wie in Fig. 3a und 3b dargestellt, sodass das Gehäuse 2 hermetisch abgedichtet ist. Da die Gehäuseteilung zwischen dem Gehäuseunterteil 2a und dem Gehäuseoberteil 2b exakt in einer Ebene liegt, kann hier eine besonders einfache Abdichtung des Gehäuses 2 erreicht werden.

An der geschlossenen Oberseite des Gehäuseoberteils 2b befindet sich eine elastische Membran 2c, die, wie in Fig. 3a dargestellt, im montierten Zustand des Gehäuses 2 mit der Oberseite 3a der Aktuatoren 3 in Kontakt steht. Die elastische Membran 3c wird bei elektrischer Ansteuerung der Aktuatoren 3 durch selbige verformt. Im montierten Zustand weist das Gehäuse 2 einen näherungsweise quaderförmigen Umriss auf, wobei die gehäuseaußenseitigen Anschlussstellen 6b seitlich in der Ebene des Gehäuseunterteils 2a aus dem Gehäuse 2 vorstehen. An diesen gehäuseaußenseitigen Anschlussstellen 6b kann, wie in Fig. 3b dargestellt, eine flexible Leiterplatte 8 angeschlossen oder mit einem festen Anschluss verbunden werden. Eine solche flexible Leiterplatte 8 weist eine mit der Leiterstruktur 6 auf dem Gehäuseunterteil 2a kommunizierende Leiterstruktur auf, um die Aktuatoren 3 mit einer elektrischen Steuerspannung zu beaufschlagen.

Fig. 4 zeigt eine Explosionsansicht des piezoelektrischen Linearantriebs 1, umfassend die aus dem Gehäuse 2 und den Aktuatoren 3 bestehende Antriebseinheit, eine als Rahmen ausgebildete Lagerstruktur 5 und die flexible Leiterplatte 8. Die als Rahmen ausgebildete Lagerstruktur 5 besteht im vorliegenden Fall aus einem näherungsweise C-förmigen Träger 5a, der einen längeren Mittelschenkel und zwei kürzere Seitenschenkel aufweist. Der Mittelschenkel des Trägers 5a bildet eine Auflage für die Antriebseinheit. Die kürzeren Seitenschenkel des Trägers 5a weisen oberseitig, d.h. an der von dem Mittelschenkel wegweisenden Seite, Öffnungen auf, an welchen ein mit einem Antriebselement 4 versehenes Federelement 5b in Gestalt eines ebenen Blechstreifens mittels Schraubenbolzen festgeschraubt werden kann. Im montierten Zustand wird das Gehäuse 2 zwischen dem Träger 5a und dem Federelement 5b eingeklemmt. Das Antriebselement 4 ist hierbei eine halbkugelförmige Reibnase, die mit ihrer flächigen Seite mittig auf der Oberseite des Federelements 5b aufliegt und mit der halbkugelförmigen Mantelfläche von diesem Federelement 5b weg weist. Zur Erhöhung der Festigkeit der Anordnung kann das Gehäuse 2 zusätzlich mit dem Träger 5a und/oder mit dem Federelement 5b verklebt werden.

Die Lagerstruktur 5 ist so dimensioniert, dass im zusammengebauten Zustand des piezoelektrischen Linearantriebs 1 das Federelement 5b exakt auf der elastischen Membran 2c des Gehäuses 2 aufliegt, wie anschaulich in den Figuren 5a und 5b dargestellt ist. Bei einer elektrischen Ansteuerung der Aktuatoren 3 wird die Auslenkung der Aktuatoren 3 entlang der Linien A zunächst auf die elastische Membran 2c, und von dort auf das gegenüber der Membran 2c federnd vorgespannte Federelement 5b übertragen, um das Antriebselement 4 entlang der Linie B in einer linearen Richtung (hin und zurück) in Bewegung zu versetzen. Je nach Ansteuerung der Aktuatoren 3 sind dabei unterschiedliche Bewegungsmuster des Antriebselements 4 darstellbar. In einem Betriebsmodus des piezoelektrischen Linearantriebs 1 sind die Aktuatoren 3 beispielsweise derart ansteuerbar, dass das Antriebselement 4 ein damit gekoppeltes, anzutreibendes Bauteil per Haft-Gleit-Effekt in einer Richtung entlang der Linie B antreibt. In einem anderen Betriebsmodus des piezoelektrischen Linearantriebs 1 treibt das Antriebselement 4 das anzutreibende Bauteil in einer entgegengesetzten Richtung entlang der Linie B an. In diesen Betriebsmodi wird jeweils einer der Aktuatoren 3 aufgrund der elektrischen Ansteuerung entlang der Linie A expandiert, und der andere der Aktuatoren 3 entlang der Linie A kontrahiert. Durch die elektrisch induzierten Verformungen der Aktuatoren 3 neigt sich das Antriebselement 4 entlang der Linie B zu einem Ende des Trägers 5a in Richtung des zusammengezogenen Aktuators 3. In der Antriebsrichtung des anzutreibenden Elements entlang der Linie B ist die Bewegung des Antriebselements 4 langsamer als in der entgegengesetzten Richtung, sodass das Antriebselement 4 das anzutreibende Element in der Haft-Phase in der Antriebsrichtung per Haftreibung mitnimmt, und in der Gleit-Phase aufgrund der Trägheit des anzutreibenden Elements in der entgegengesetzten Richtung an dem anzutreibenden Element entlang gleitet. Der Haft-Gleit-Effekt (Stick-Slip-Effekt) sowie die Funktion und Wirkungsweise entsprechender piezoelektrischer Linearantriebe 1 sind grundsätzlich bekannt und werden daher nicht näher erläutert.

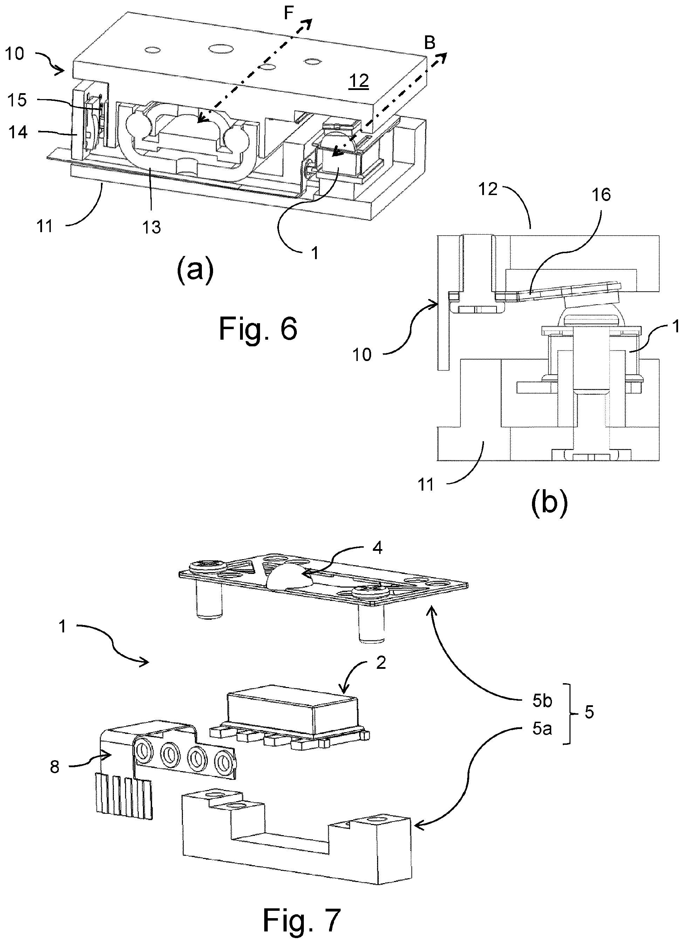

In einer an sich bekannten Anordnung kann ein solcher piezoelektrischer Linearantrieb 1 in einem herkömmlichen Linear- oder Rotationstisch 10 eingesetzt werden. Dabei wird der piezoelektrischer Linearantrieb 1, wie in Fig. 6a und 6b dargestellt, an einem Stator 11 derart montiert, dass die Antriebsrichtung B parallel zu einer durch eine Linearführung 13 vorgegebenen Führungsrichtung F des Läufers 12 ausgerichtet ist. Über einen Positionsencoder 14 und einen Positionssensor 15 wird eine Position des Läufers 12 gegenüber dem Stator 11 bestimmt. Diese Information wird zur Ansteuerung der Aktuatoren 3 des piezoelektrischen Linearantriebs 1 verwendet, um die Position des Läufers 12 gegenüber dem Stator 11 zu regeln.

Gemäß der Darstellung in Fig. 6b ist der Läufer 12 federnd gegenüber dem Stator 11 bzw. gegenüber dem Antriebselement 4 des piezoelektrischen Linearantriebs 1 vorgespannt. Dazu befindet sich an der Unterseite des Läufers 12 eine auskragende Federplatte 16, die an einem Ende davon mit dem Läufer 12 verschraubt ist und mit ihrem freien Ende mit dem Antriebselement 4 des piezoelektrischen Linearantriebs 1 in Kontakt steht. Durch diese Federplatte 16 kann der Läufer 12 die von dem Antriebselement 4 ausgeübten Antriebskräfte des piezoelektrischen Linearantriebs 1 besonders gut aufnehmen.

Das zweite Ausführungsbeispiel, das nachstehend mit Bezug auf die Fign. 7 bis 10 beschrieben wird, basiert im Wesentlichen auf dem ersten Ausführungsbeispiel und umfasst weitgehend identische Merkmale. Zur Vermeidung von Wiederholungen sind diese identischen Merkmale in den Figuren mit identischen Bezugszeichen versehen. Zur Erläuterung dieser Bezugszeichen wird auf das erste Ausführungsbeispiel in den Fign. 1 bis 6 verwiesen. Die wesentlichen Unterschiede zum ersten Ausführungsbeispiel werden nachstehend im Detail beschrieben.

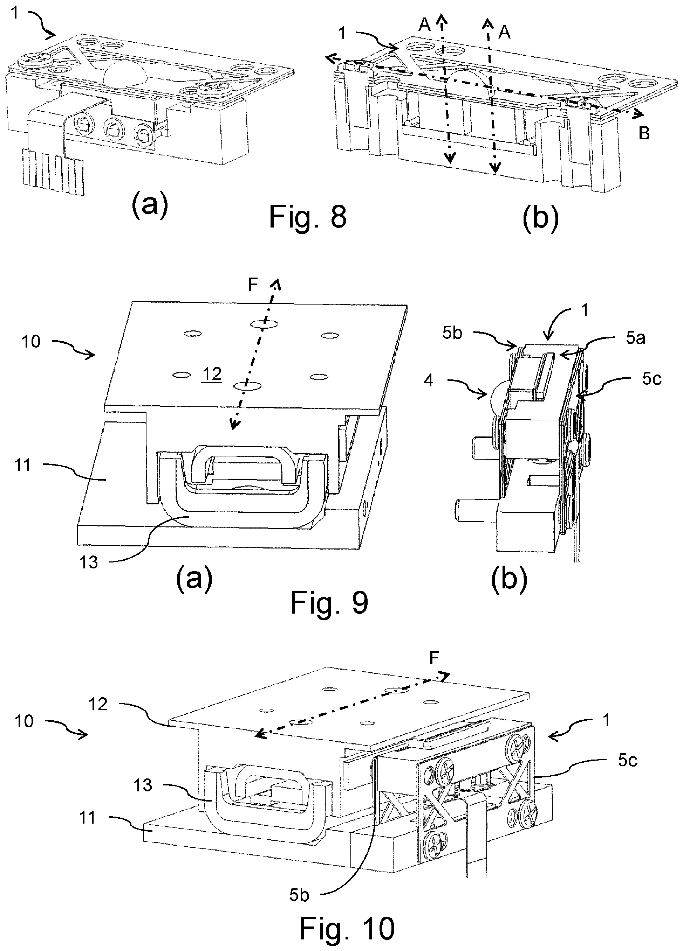

In den Fign. 7 bis 10 wird eine weitere Ausführung des gekapselten piezoelektrischen Linearantriebs 1 gezeigt. Abweichend zu der vorbeschriebenen Ausführung umfasst das Federelement 5b der Lagerstruktur 5 des piezoelektrischen Linearantriebs 1 eine andere Ausgestaltung. Dieses Federelement 5b der Lagerstruktur 5 ist nicht nur als Blechstreifen mit näherungsweise identischer Breite wie der Träger 5a ausgebildet, sondern kragt einseitig deutlich über den Träger 5a aus. An dieser auskragenden Seite des Federelements 5b wird der piezoelektrische Linearantrieb 1 federnd am Stator 11 des Linearantriebs 10 gelagert. Zur Erhöhung der Stabilität und Federwirkung kann an der Unterseite des Trägers 5a ein entsprechendes Federelement 5c, entsprechend dem Federelement 5b an der Oberseite des Trägers 5a, vorgesehen sein, wie in der Darstellung eines herkömmlichen Linear- oder Rotationstischs 10 in den Figuren 9 und 10 ersichtlich ist. Durch Materialaussparungen und Einschnitte kann das Gewicht solcher Federelemente 5b, 5c in Anwendungen der Erkenntnisse der Leichtbautechnik bei nahezu unveränderter Stabilität minimiert werden.

Abweichend vom ersten Ausführungsbeispiel erzeugt insbesondere das Federelement 5b des piezoelektrischen Linearantriebs 1 also nicht nur eine federnde Vorspannung des Antriebselements 4 zu den Aktuatoren 3, sondern auch eine federnde Vorspannung des Antriebselements 4 gegenüber dem Läufer 12. Folglich wird durch diese Anordnung sowohl die Kraftübertragung zwischen den Aktuatoren 3 und dem Antriebselement 4, als auch die Kraftübertragung zwischen dem Antriebselement 4 und dem Läufer 12 verbessert.

Das Prinzip eines eingekapselten piezoelektrischen Linearantrieb 1, insbesondere eines piezoelektrischer Trägheits- oder Resonanzantrieb, bei dem wenigstens zwei Aktuatoren 3 (z.B. piezoelektrische Mehrschichtaktuatoren 3) in einem Gehäuse 2 auf einer Basisplatte 2a angeordnet sind, und ein friktionsgekoppeltes Antriebselement 4 an der Oberseite dieses Gehäuses 2 angeordnet ist, schützt die Aktuatoren 3 vor dem staubförmigen Abrieb, der beim Gleitkontakt zwischen Läufer 12 und Stator 11 eines 2-dimensional bewegbaren Linear- oder Rotationstischs erzeugt wird, ebenso wie vor Schmierstoff, der gegebenenfalls in den Linear- oder Rotationsführungen eingesetzt wird. Die Besonderheit dieser eingekapselten piezoelektrischen Linearantriebe 1 ist es, dass die Kraftübertragung zwischen den Aktuatoren 3 und dem friktionsgekoppelten Antriebselement 4 nicht durch die Einkapselung der Aktuatoren 3 im Gehäuse 2 beeinträchtigt wird. Eine weitere sekundäre Funktion des Gehäuses 2 ist die Ableitung von Wärme, die von den Aktuatoren 3 im Betrieb erzeugt wird, an die Umgebung. Das Gehäuse 2 kann die piezoelektrischen Schichten und Schichtelektroden sowie die gehäuseinnenseitigen Anschlusselektroden 6a der Aktuatoren 3 gut vor Oxidation schützen. Die Isolation der Kontaktstellen der Aktuatoren 3 und Elektroden gegenüber der Umgebung verhindert entsprechend eine staub- oder feuchtigkeitsbedingte Oxidation auch unter anspruchsvollen Umgebungsbedingungen. Die Isolation der Aktuatoren 3 ermöglicht so einen erheblichen Vorteil für einen zuverlässigen Betrieb und eine lange Lebensdauer des piezoelektrischen Linearantriebs 1.

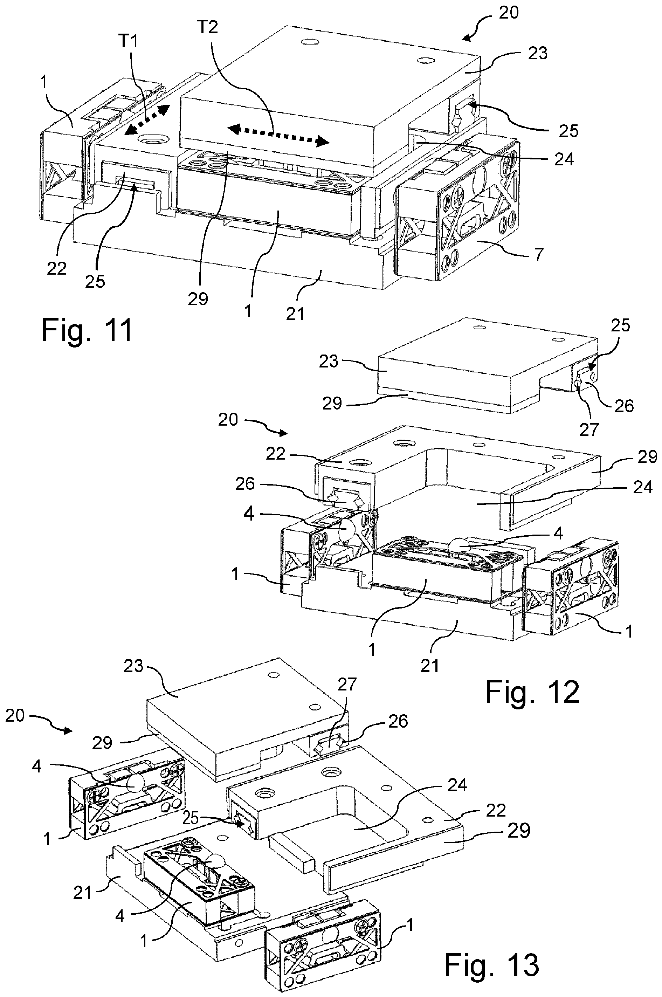

Die Fign. 11 bis 28 zeigen verschiedene Ausführungsformen erfindungsgemäßer 2-dimensional bewegbarer Linear- oder Rotationstische 20. Derartige 2-dimensional bewegbare Linear- oder Rotationstische 20 bestehen im Wesentlichen aus drei Schichten, einem als untere Schicht oder Grundplatte fungierenden Stator 21, einer mittleren Läuferplatte 22 und einer oberen Läuferplatte 23, die jeweils übereinander angeordnet sind und dazwischen zwei Bewegungsebenen definieren, um die obere Läuferplatte 22 in Relation zu dem Stator 21 in zwei unabhängigen translatorischen Bewegungsrichtungen T1, T2 oder zwei unabhängigen rotatorischen Bewegungsrichtung R1, R2 zu bewegen. Dabei bewegt sich lediglich die obere Läuferplatte 23 in beide unabhängigen translatorischen Bewegungsrichtungen T1, T2 oder rotatorischen Bewegungsrichtung R1, R2. Für jede der zwei unabhängigen translatorischen Bewegungsrichtungen T1, T2 oder zwei unabhängigen rotatorischen Bewegungsrichtungen R1, R2 ist mindestens ein piezoelektrischer Linearantrieb 1 vorgesehen, der mit seinem Rahmen 5 bzw. Rahmen-Unterteil 5a am Stator 21 befestigt ist, während die Antriebselemente 4 der piezoelektrischen Linearantriebe 1 auf die mittlere Läuferplatte 22 oder die obere Läuferplatte 22 wirken, um die obere Läuferplatte 22 relativ zu dem Stator 21 in die zwei unabhängigen translatorischen Bewegungsrichtungen T1, T2 oder zwei unabhängigen rotatorischen Bewegungsrichtungen R1, R2 zu bewegen. Da die Träger 5 der piezoelektrischen Linearantriebe 1 fest mit dem Stator 21 des 2-dimensional bewegbaren Linear- oder Rotationstisch 20 verbunden sind, können die Anschlussleitungen der piezoelektrischen Linearantriebe 1 fest verlegt werden, so dass in einer erfindungsgemäßen Ausgestaltung des Linear- oder Rotationstischs 20 vollständig auf eine flexible Anschlussleitung für die piezoelektrische Linearantriebe 1 zur Bewegung der oberen Läuferplatte 23 verzichtet werden kann.

Die perspektivische Ansicht in Fig. 11 zeigt einen erfindungsgemäßen 2-dimensional bewegbare Lineartisch 20. Wie an den Explosionszeichnungen in Fig. 12 und 13 gut zu erkennen, umfasst dieser 2-dimensional bewegbare Lineartisch 20 einen Stator 21, an dem drei piezoelektrische Linearantriebe 1 angeordnet sind sowie eine mittlere Läuferplatte 22 und eine obere Läuferplatte 23. Die piezoelektrischen Linearantriebe 1 sind dabei jeweils mit ihrem Rahmen 5 fest an dem Stator 21 montiert, während das Antriebselement 4 auf die mittlere Läuferplatte 22 oder die obere Läuferplatte 23 wirkt, um die obere Läuferplatte 23 in zwei unabhängigen translatorischen Bewegungsrichtungen T1, T2 zu bewegen. Die beiden an den äußeren Stirnseiten des Stators 21 angeordneten piezoelektrischen Linearantriebe 1 wirken dabei auf die Seiten der mittleren Läuferplatte 22, um die mittlere Läuferplatte 22 in einer ersten translatorischen Bewegungsrichtungen T1 zu bewegen. Der dazwischen in der Mitte des Stators 21 angeordnete piezoelektrischer Linearantrieb 1 wirkt mit seinem Antriebselement 4 durch eine Öffnung 24 in der mittleren Läuferplatte 22 hindurch direkt auf die obere Läuferplatte 23, um die obere Läuferplatte 23 unabhängig von der Bewegung oder Position der mittleren Läuferplatte 22 in einer zweiten translatorischen Bewegungsrichtung T2 zu bewegen.

Bei einer Bewegung der oberen Läuferplatte 23 über den mittig am Stator 21 angeordneten und elektrisch erregten piezoelektrischen Linearantrieb 1 wird die mittlere Läuferplatte 22 durch die zwei seitlich angeordneten piezoelektrischen Linearantriebe 1 in ihrer Position in der ersten translatorischen Bewegungsrichtung T1 gehalten, sofern diese beiden piezoelektrischen Linearantriebe 1 nicht elektrisch erregt werden. In einem Fall, in dem alle am Stator 21 befestigten piezoelektrischen Linearantriebe 1 elektrisch erregt werden, bewegt sich die obere Läuferplatte 23 gleichzeitig in den zwei unabhängigen translatorischen Bewegungsrichtungen T1, T2. Bei einer ausschließlichen Ansteuerung der zwei seitlich angeordneten piezoelektrischen Linearantriebe 1, um die mittlere Läuferplatte 22 nur entlang der ersten translatorischen Bewegungsrichtung T1 zu bewegen, findet diese Bewegung der mittlere Läuferplatte 22 gegen eine Hemmung durch den Friktionskontakt zwischen dem Antriebselement 4 des in der Mitte des Stators 21 angeordneten piezoelektrischen Linearantriebs 1 und der Reibplatte 29 der oberen Läuferplatte 23 statt. Durch eine elektrische Anregung beider Aktuatoren 3 dieses piezoelektrischen Linearantriebs 1, der für die Bewegung der oberen Läuferplatte 23 in der zweiten translatorischen Bewegungsrichtung T2 zuständig ist, mit dem gleichen Spannungssignal, bevorzugt einem sinusförmigen oder sägezahnförmigen Spannungssignal, d.h. bei einer phasengleicher Ansteuerung der beiden einander entgegenwirkenden Aktuatoren 3, kann die ansonsten beim Losbrechen und während der Bewegung auftretende Reibungshemmung zwischen dem Antriebselement 4 und der Reibplatte 29 reduziert werden.

Für eine sichere und spielfreie Bewegung der oberen Läuferplatte 23 in den zwei unabhängigen translatorischen Bewegungsrichtungen T1, T2 ist sowohl die mittlere Läuferplatte 22 als auch die obere Läuferplatte 23 mit einer Führung 25 versehen. Die Führung 25 weist jeweils eine Führungsschiene 26 und eine Führungsaufnahme 27 auf. Zur axialen Führung der mittleren Läuferplatte 22 in der ersten unabhängigen translatorischen Bewegungsrichtung T1 ist eine Führungsschiene 26 auf dem Stator 21 befestigt und in einer entsprechenden Führungsaufnahme 27 der mittleren Läuferplatte 22 aufgenommen und zur axialen Führung der oberen Läuferplatte 23 in der zweiten unabhängigen translatorischen Bewegungsrichtung T2 ist eine Führungsschiene 26 auf der mittleren Läuferplatte 22 befestigt und in einer Führungsaufnahme 27 in der oberen Läuferplatte 22 aufgenommen.

Weiterhin sind an den Stirnseiten der mittleren Läuferplatte 22 und an der Unterseite der oberen Läuferplatte 23 Reibplatten 29 vorgesehen, die mit den Antriebselementen 4 der jeweiligen piezoelektrischen Linearantriebe 1 in Kontakt stehen und eine sichere Bewegung der mittleren Läuferplatte 22 und der oberen Läuferplatte 23 in den zwei unabhängigen translatorischen Bewegungsrichtungen T1, T2 ermöglichen. Dabei können die Reibplatten 29 gegenüber den Antriebselementen 4 vorgespannt sein.

Die besondere linienförmige Anordnung der drei piezoelektrischen Linearantriebe 1 am Stator 21 ermöglicht den Aufbau eines sehr schlanken 2-dimensional bewegbaren Lineartischs 20, der ohne bewegliche Anschlusskabel für die Versorgung der piezoelektrischen Linearantriebe 1 auskommt. Weiter ermöglicht die vollständig getrennte Wirkung der einzelnen piezoelektrischen Linearantriebe 1 auf die mittlere Läuferplatte 22 und die obere Läuferplatte 23 eine vollständige Entkopplung der Bewegung der oberen Läuferplatte 23 in die zwei unabhängigen translatorischen Bewegungsrichtungen T1, T2.

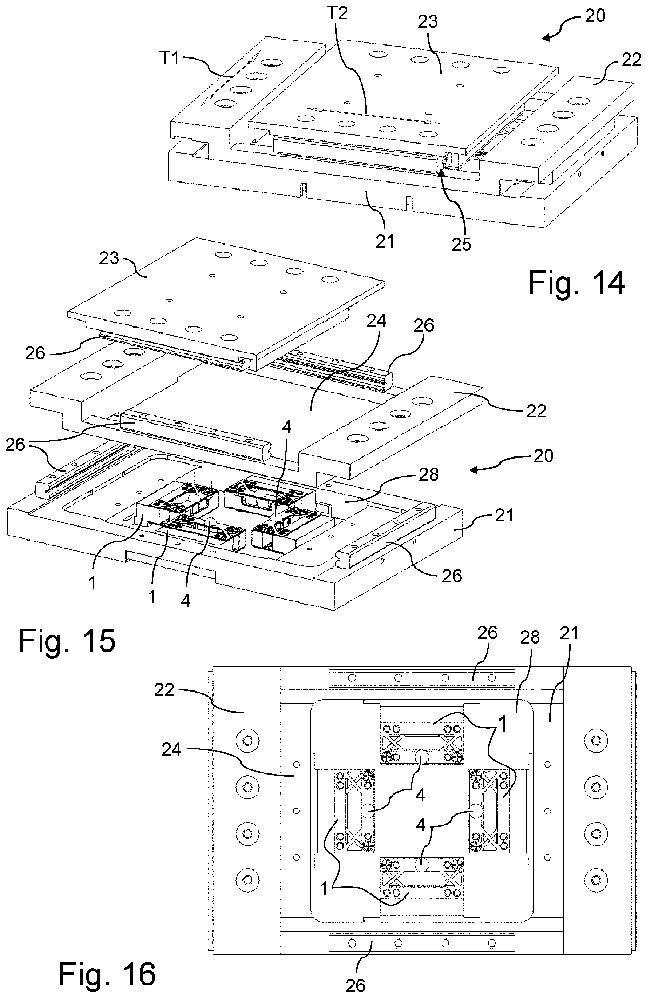

Die Fign. 14 bis 16 zeigen eine zweite Ausführungsform eines 2-dimensionalen Lineartischs 20 gemäß der vorliegenden Erfindung in einer ersten Variante. Dieser 2-dimensional bewegbare Lineartisch 20 weist wiederum als Grundplatte einen Stator 21, eine mittlere Läuferplatte 22 und eine obere Läuferplatte 23 auf. Wie die perspektivische Explosionsansicht in Fig. 15 zeigt, sind an diesem Stator 21 vier piezoelektrische Linearantriebe 1 in einer mittleren Aussparung 28 in der Grundplatte bzw. dem Stator 21 fest angeordnet, um über die jeweiligen Antriebselemente 4 die obere Läuferplatte 23 in zwei unabhängige translatorischen Bewegungsrichtungen T1, T2 zu bewegen. Dabei wirken die Antriebselemente 4 der piezoelektrischen Linearantriebe 1 jeweils direkt auf die Unterseite der oberen Läuferplatte 23 bzw. auf eine Reibplatte 29. Die in Richtung der Stirnseite des Stators 21 angeordneten piezoelektrischen Linearantriebe 1 bewegen bei einer elektrischen Anregung über die Antriebselemente 4 die mittlere Läuferplatte 22 zusammen mit der oberen Läuferplatte 23 in der ersten translatorischen Bewegungsrichtung T1, während die an der Längsseite des Stators 21 in der Aussparung 28 angeordneten piezoelektrischen Linearantriebe 1 nur die obere Läuferplatte 23 in der zweiten translatorischen Bewegungsrichtung T2 bewegen. Zur sicheren axialen Führung der mittleren Läuferplatte 22 und der oberen Läuferplatte 23 sind auch hier wieder Führungen 25 vorgesehen, die als ineinander eingreifende Führungsschienen 26 ausgebildet sind.

Wie in der Draufsicht auf den 2-dimensional bewegbaren Lineartisch 20 ohne die obere Läuferplatte 23 in Fig. 16 gut zu erkennen ist, wirken die Antriebselemente 4 der in der Aussparung 28 des Stators angeordneten piezoelektrischen Linearantriebe 1 ausschließlich auf die obere Läuferplatte 23, so dass die Bewegung der mittleren Läuferplatte 22 in der ersten translatorischen Bewegungsrichtung lediglich mittelbar über die mittels den Führungsschienen 26 der Führung 25 mit der mittleren Läuferplatte 22 gekoppelten oberen Läuferplatte 23 erfolgt. Auch in dieser Variante eines erfindungsgemäßen 2-dimensional bewegbaren Lineartischs ist durch die Anordnung der piezoelektrischen Linearantriebe 1 entsprechend den translatorischen Bewegungsrichtungen T1, T2 eine Entkopplung der Bewegung der oberen Läuferplatte 23 in den zwei unabhängigen translatorischen Bewegungsrichtungen T1 und T2 über eine selektive elektrische Ansteuerung der piezoelektrischen Linearantriebe 1 möglich. Durch die Anordnung der piezoelektrischen Linearantriebe 1 in der Aussparung 28 im Stator 21 und den direkten Antrieb der piezoelektrischen Linearantriebe 1 über die an der oberen Läuferplatte 23 anliegenden Antriebselemente 4 ergibt sich ein sehr flacher Aufbau eines erfindungsgemäßen 2-dimensional bewegbaren Lineartischs 20.

Auch hier können bei einer reinen Ansteuerung der zwei seitlich angeordneten piezoelektrischen Linearantriebe 1, um ausschließlich die mittlere Läuferplatte 22 entlang der ersten translatorischen Bewegungsrichtung T1 zu bewegen, die beiden Aktuatoren 3 der zwei mittleren piezoelektrischen Linearantriebe 1, die für die Bewegung oberen Läuferplatte 23 in der zweiten translatorischen Bewegungsrichtung T2 an den Längsseiten des Stators 21 angeordnet sind, wieder mit einem gleichen Spannungssignal angeregt werden, um den Friktionskontakt zwischen den zugehörigen Antriebselementen 4 und der oberen Läuferplatte 23 zu reduzieren.

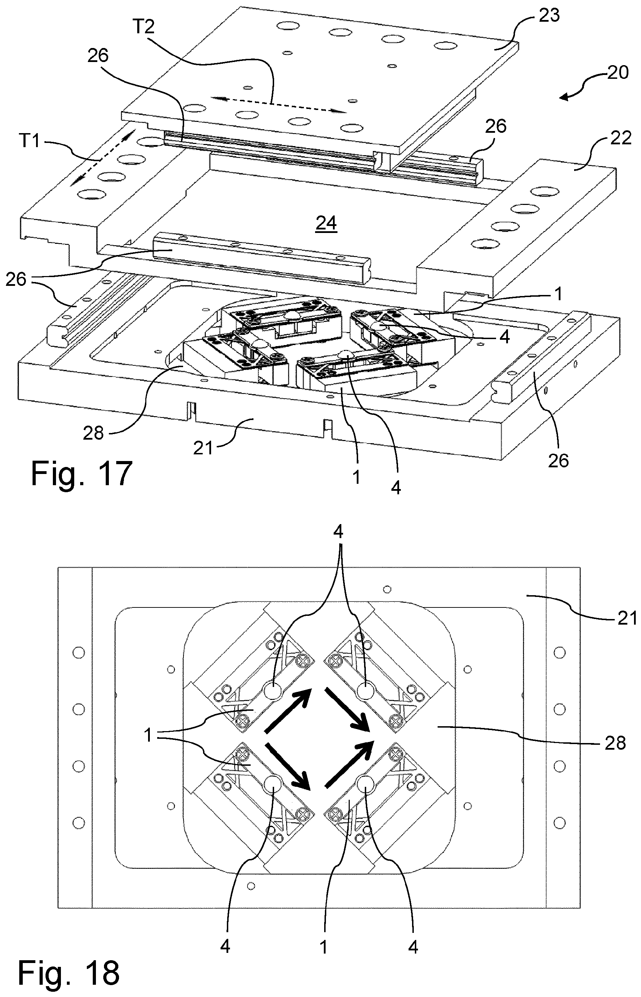

Die Fign. 17 und 18 zeigen eine zweite Variante der in Fig. 14 dargestellten Ausführungsform eines erfindungsgemäßen 2-dimensional bewegbaren Lineartischs 20. In der perspektivischen Explosionsansicht in Fig. 17 ist deutlich zu erkennen, dass in dieser Variante die vier piezoelektrischen Linearantriebe 1 in der Aussparung 28 des Stators 21 um 45° gedreht zu den translatorischen Bewegungsrichtungen T1 und T2 angeordnet sind. Auch hier wirken die Antriebselemente 4 der am Stator 21 befestigten piezoelektrischen Linearantriebe 1 jeweils wieder direkt auf die obere Läuferplatte 23, so dass eine Bewegung der mittleren Läuferplatte 22 in der ersten translatorischen Bewegungsrichtung T1 lediglich mittelbar über die Bewegung der oberen Läuferplatte 23 erfolgt. Auch hier wird wieder die mittlere Läuferplatte 22 durch am Stator befestigte Führungsschienen 26 und die obere Läuferplatte 23 durch an der mittleren Läuferplatte 22 befestigte Führungsschienen 26 in den ersten und zweiten translatorischen Bewegungsrichtungen T1 und T2 geführt. Wie in der ohne mittlere Läuferplatte 22 und obere Läuferplatte 23 dargestellten Draufsicht in Fig. 18 zu erkennen, bewegen sich jeweils zwei der in der Aussparung 28 des Stators 21 gegenüberliegend angeordneten piezoelektrischen Linearantriebe 1 in einer Richtung, die zu den translatorischen Bewegungsrichtungen T1, T2 um 45° geneigt ist. Daher werden die Bewegungsbeiträge der einzelnen piezoelektrischen Linearantriebe 1 addiert bzw. subtrahiert, um im Ergebnis eine Bewegung der oberen Läuferplatte 23 in der ersten und zweiten translatorischen Bewegungsrichtung T1 und T2 zu erreichen. Für eine Bewegung entlang ausschließlich einer der translatorischen Bewegungsrichtungen T1 und T2 werden alle vier piezoelektrischen Linearantriebe 1 gleichzeitig angesteuert. Bei den in Fig. 18 durch Pfeile angedeuteten Schwingrichtungen der zugehörigen Antriebselemente 4 resultiert eine Bewegung entlang der translatorischen Bewegungsrichtung T2. Durch eine Ansteuerung, bei der die Schwingrichtung von zwei einander gegenüberliegenden Antriebselementen 4 in einer entgegengesetzten Richtung verläuft, ergibt sich hingegen eine Bewegung der oberen Läuferplatte 23 und der mittleren Läuferplatte 22 entlang der translatorischen Bewegungsrichtung T1.

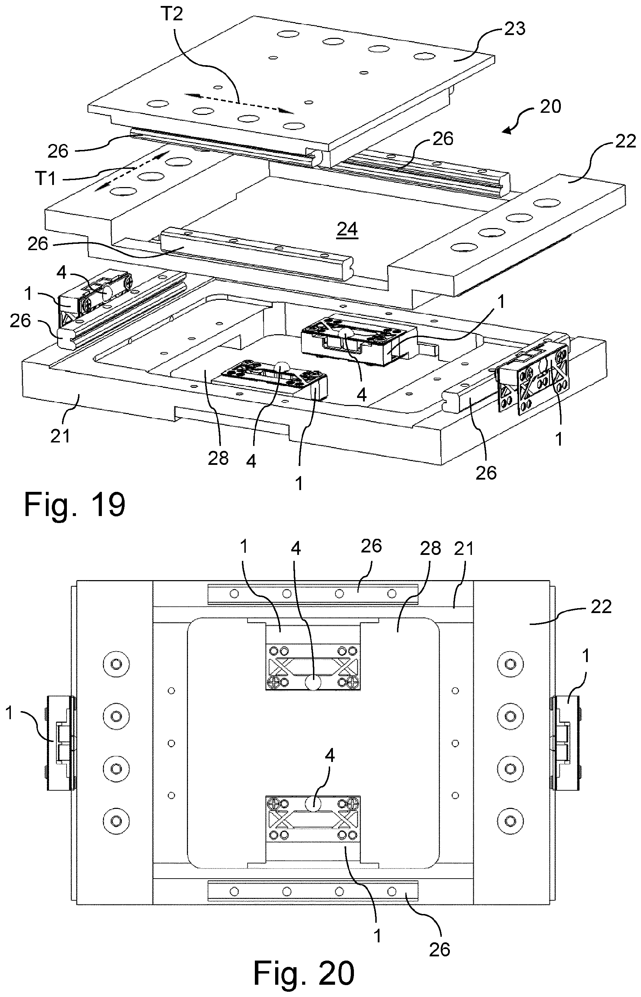

Eine weitere Variante der in Fig. 14 gezeigten Ausführungsform eines erfindungsgemäßen 2-dimensionalen Lineartischs 20 zeigen die Figuren 19 und 20. Im Gegensatz zu den beiden vorherigen Varianten sind die beiden piezoelektrischen Linearantriebe 1 für die Bewegung der mittleren Läuferplatte 22 in der ersten unabhängigen translatorischen Bewegungsrichtung T1 an den Stirnseiten des Stators 21 angeordnet und wirken mit ihren Antriebselementen 4 unmittelbar auf die mittlere Läuferplatte 22. Wie in der perspektivischen Explosionsansicht in Fig. 19 zu erkennen, sind in der Aussparung 28 des Stators 21 nunmehr lediglich zwei piezoelektrische Linearantriebe 1 vorgesehen, deren Antriebselemente 4 durch die Öffnung 24 in der mittleren Läuferplatte 22 auf die Unterseite der oberen Läuferplatte 23 wirken, um die obere Läuferplatte 23 in der zweiten unabhängigen translatorischen Bewegungsrichtung T2 zu bewegen. Entsprechend erfolgt die Bewegung der oberen Läuferplatte 23 in der ersten translatorischen Bewegungsrichtung T1 mittelbar über die Bewegung der mittleren Läuferplatte 22. Bei einer reinen Ansteuerung der zwei seitlich angeordneten piezoelektrischen Linearantriebe 1 für eine Bewegung der mittleren Läuferplatte 22 entlang der ersten translatorischen Bewegungsrichtung T1 können die beiden Aktuatoren 3 der zwei in der Aussparung 28 des Stators 21 angeordneten piezoelektrischen Linearantriebe 1 mit einem gleichen Spannungssignal angeregt werden, um die Reibung zwischen den zugehörigen Antriebselementen 4 und der oberen Läuferplatte 23 zu verringern. Auch hier sind wieder am Stator 21 Führungsschienen 26 zur Führung der mittleren Läuferplatte 22 in der ersten translatorischen Bewegungsrichtung T1 sowie Führungsschienen 26 an der mittleren Läuferplatte 22 zur Führung der oberen Läuferplatte 23 in der zweiten translatorischen Bewegungsrichtung T2 vorgesehen. Trotz der unmittelbaren Bewegung der mittleren Läuferplatte 22 über die seitlich angeordneten piezoelektrischen Linearantriebe 1 in der ersten translatorischen Bewegungsrichtung T1 ermöglicht diese Variante wieder einen sehr flachen Aufbau eines erfindungsgemäßen 2-dimensional bewegbaren Lineartischs 20 sowie eine Entkopplung der Bewegung der oberen Läuferplatte 22 in den ersten und zweiten translatorischen Bewegungsrichtungen T1 und T2.

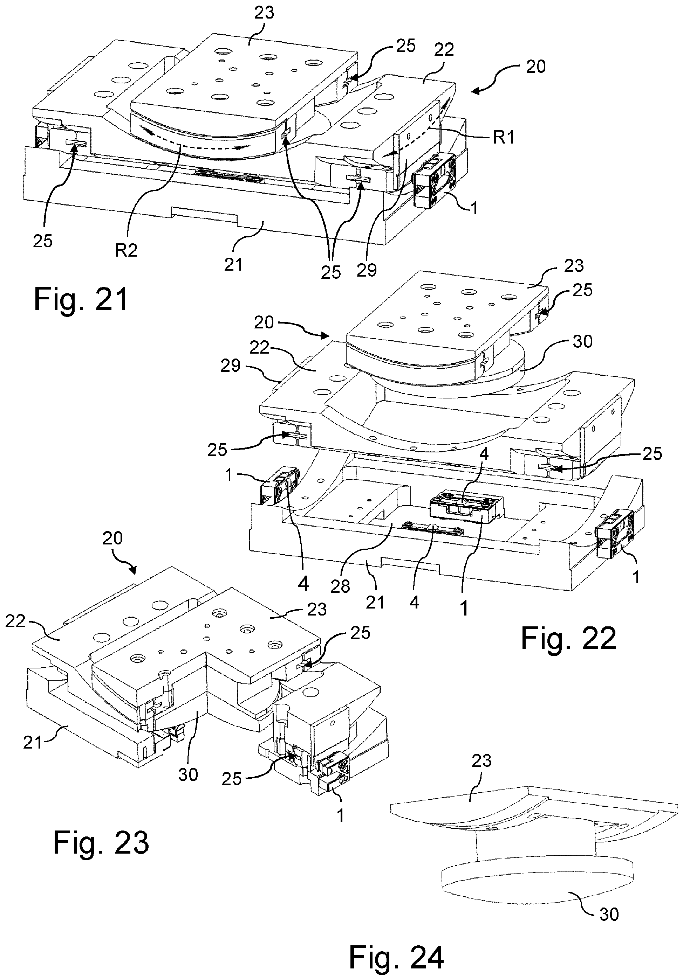

Eine weitere Ausführungsform eines erfindungsgemäßen 2-dimensionalen bewegbaren Linear- oder Rotationstischs 20 zeigen die Figuren 21 bis 24. Dieser für eine Rotations- oder Kippbewegung ausgebildete 2-dimensionale Rotationstisch 20 erlaubt eine Bewegung der oberen Läuferplatte 22 in zwei unabhängige rotatorische Bewegungsrichtungen R1, R2, d.h. eine Bewegung um jeweils eine der drei voneinander unabhängigen Drehachsen eines festen Körpers im freien Raum. Wie in der perspektivischen Explosionsansicht in Fig. 22 sowie der teilweise frei geschnittenen perspektivischen Ansicht in Fig. 23 zu erkennen, umfasst dieser 2-dimensional bewegbare Rotationstisch 20 einen als Grundplatte dienenden Stator 21, eine darüber angeordnete mittlere Läuferplatte 22 sowie eine oberhalb davon angeordnete obere Läuferplatte 23. Dabei erlaubt die zwischen dem Stator 21 und der mittleren Läuferplatte 22 angeordnete Führung 25 eine sichere Bewegung der mittleren Läuferplatte 22 und der damit gekoppelten oberen Läuferplatte 23 in der ersten rotatorischen Bewegungsrichtung R1 und die Führung 25 zwischen der mittleren Läuferplatte 22 und der oberen Läuferplatte 23 eine sichere Bewegung der oberen Läuferplatte 23 in der zweiten rotatorischen Bewegungsrichtung R2.

Weiterhin sind an den Stirnseiten des Stators 21 zwei piezoelektrische Linearantriebe 1 angeordnet, wobei die piezoelektrischen Linearantriebe 1 über den Rahmen 5 fest mit dem Stator 21 verbunden sind und deren Antriebselemente 4 auf entsprechende Reibplatten 29 an den Stirnseiten der Läufer hatte 22 wirken, um die mittlere Läuferplatte 22 in der ersten rotatorischen Bewegungsrichtung R1 bewegen. Zusammen mit der mittleren Läuferplatte 22 bewegt sich mittelbar auch die obere Läuferplatte 23 in der ersten rotatorischen Bewegungsrichtung R1. In einer Aussparung 28 des Stators 21 sind zwei weitere piezoelektrische Linearantriebe 1 angeordnet, die sich in Längsrichtung des Stators 21 erstrecken. Diese fest mit dem Stator 21 verbundenen piezoelektrischen Linearantriebe 1 wirken über ihre Antriebselement 4 durch eine Öffnung 24 in der mittleren Läuferplatte 22 hindurch direkt auf die obere Läuferplatte 23, um diese in der zweiten rotatorischen Bewegungsrichtung R2 bewegen.

Um die obere Läuferplatte 23 trotz der mit der mittleren Läuferplatte 22 gekoppelten Bewegung in der ersten rotatorischen Bewegungsrichtung R1 über die in der Aussparung 28 des Stators 21 angeordneten piezoelektrische Linearantriebe in der zweiten rotatorischen Bewegungsrichtung R2 zu bewegen, weist die obere Läuferplatte 23 an der Unterseite einen sphärischen oder kugelförmigen Reibkopf 30 auf, der trotz einer Drehung der oberen Läuferplatte 23 in der ersten rotatorischen Bewegungsrichtung R1 immer einen sicheren Kontakt zu den Antriebselementen 4 der innenliegenden piezoelektrischen Linearantriebe 1 sicherstellt und eine Drehung der oberen Läuferplatte 23 in der zweiten translatorischen Bewegungsrichtung R2 ermöglicht. Auch hier können bei einer reinen Ansteuerung der zwei seitlich angeordneten piezoelektrischen Linearantriebe 1, um ausschließlich die mittlere Läuferplatte 22 in der ersten rotatorischen Bewegungsrichtung R1 zu bewegen, die beiden Aktuatoren 3 der zwei in der Aussparung 28 des Stators 21 angeordneten piezoelektrischen Linearantriebe 1, die für die Bewegung der oberen Läuferplatte 23 in der der zweiten rotatorischen Bewegungsrichtung R2 an den Längsseiten des Stators 21 angeordnet sind, mit einem gleichen Spannungssignal angeregt werden, um den Friktionskontakt zwischen den zugehörigen Antriebselementen 4 und dem sphärischen oder kugelförmigen Reibkopf 30 zu reduzieren. Dieser erfindungsgemäße Aufbau eines 2-dimensional bewegbaren Rotationstischs 20 erlaubt die Bereitstellung sehr flacher Rotations- und Kipptische und ermöglicht trotzdem eine sichere und genaue Positionierung der oberen Läuferplatte 23 sowie der darauf angeordneten Objekte in zwei translatorischen Bewegungsrichtungen R1, R2.

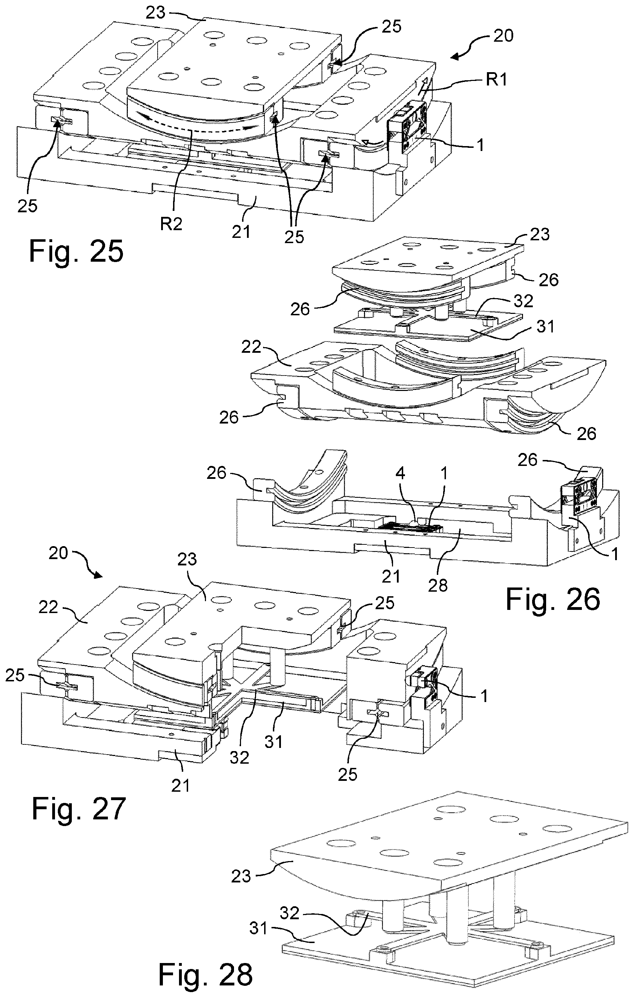

Eine weitere Variante eines in zwei unabhängige rotatorische Bewegungsrichtungen R1, R2 drehbaren 2-dimensional bewegbarer Rotationstischs 20 gemäß der vorliegenden Erfindung wird in den Figuren 25 bis 28 gezeigt. Dabei entspricht der Aufbau des Rotationstischs 20 mit einem Stator 21, einer mittlere Läuferplatte 22 und einer oberen Läuferplatte 23, die übereinander angeordnet sind und dazwischen zwei Bewegungsebenen definieren, sowie den außen an den Stirnseiten des Stators 21 angeordneten piezoelektrischen Linearantrieben 1 zur Bewegung der mittleren Läuferplatte 22 in der ersten rotatorischen Bewegungsrichtung R1 sowie den Führungen 25 zwischen dem Stator 21 und der mittleren Läuferplatte 22 sowie zwischen der mittleren Läuferplatte 22 und der oberen Läuferplatte 23 der in den Figuren 21 und 22 gezeigten Ausführungsform. Im Gegensatz hierzu weist dieser 2-dimensional bewegbare Rotationstisch 20 in der Aussparung 28 des Stators 21 lediglich einen fest mit dem Stator 21 verbundenen piezoelektrische Linearantrieb 1 auf.

Um eine Bewegung des Antriebselements 4 dieses piezoelektrischen Linearantriebs 1 in einer linearen Richtung in eine Bewegung der oberen Läuferplatte 23 in die zweite rotatorische Bewegungsrichtung R2 zu übertragen, ist an der Unterseite der oberen Läuferplatte 23 eine flache Reibungsplatte 31 vorgesehen, die über eine flache Biegefeder 32 mit der Unterseite der oberen Läuferplatte 23 verbunden ist. Bei einer Bewegung der oberen Läuferplatte 23 in der zweiten rotatorischen Bewegungsrichtung R2 folgt die flache Biegefeder 32 mit einer entsprechenden Krümmung, so dass ein unveränderter Reibungskontakt zwischen dem Antriebselement 4 des piezoelektrischen Linearantriebs 1 und der mit der oberen Läuferplatte 23 verbundenen Reibungsplatte 31 aufrechterhalten wird. Bei einer reinen Ansteuerung der zwei an den Stirnseiten des Stators 21 angeordneten piezoelektrischen Linearantriebe 1 für eine Bewegung der mittleren Läuferplatte 22 in der ersten rotatorischen Bewegungsrichtung R1 können die beiden Aktuatoren 3 des in der Aussparung 28 des Stators 21 angeordneten piezoelektrischen Linearantriebs 1 mit einem gleichen Spannungssignal angeregt werden, um die Friktionshemmung zwischen den zugehörigen Antriebselementen 4 und der Reibungsplatte 31 der oberen Läuferplatte 23 zu verringern. Die an den äußeren Stirnseiten des Stators 21 angeordneten piezoelektrischen Linearantriebe 1 zum Bewegen der mittleren Läuferplatte 22 in der ersten rotatorischen Bewegungsrichtung können auch innerhalb der Aussparung 28 des Stators angeordnet sein und von dort die mittlere Läuferplatte 22 in der ersten rotatorischen Bewegungsrichtung R1 bewegen.

### Bezugszeichenliste

- 1: piezoelektrischer Linearantrieb
- 2: Gehäuse
- 2a: Gehäuseunterteil (Platte)
- 2b: Gehäuseoberteil (Hohlkörper bzw. Deckel)
- 2c: Membran (elastischer Wandabschnitt)
- 3: Aktuator
- 3a: Stapelverbund
- 3b: Seitenelektroden
- 3c: Seitenelektroden
- 4: Antriebselement
- 5: Lagerstruktur (Rahmen)
- 5a: Unterteil (Träger)
- 5b: Oberteil (Federelement)
- 5c: Hinterteil (Federelement)
- 6: Leiterstruktur
- 6a: gehäuseinnenseitige Anschlussstellen
- 6b: gehäuseaußenseitige Anschlussstellen
- 6c: Leiterbahnen
- 7: Dichtung
- 8: Leiterplatte
- 10: Lineartisch
- 11: Stator
- 12: Läuferplatte
- 13: Linearführung
- 14: Positionssensor
- 15: Positionsencoder
- 16: Blattfeder
- 17: Strom- und/oder Signalschiene
- 20: 2-dimensionaler Linear- oder Rotationstisch
- 21: Stator
- 22: mittlere Läuferplatte
- 23: obere Läuferplatte
- 24: Öffnung
- 25: Führung
- 26: Führungsschiene
- 27: Führungsaufnahme
- 28: Aussparung
- 29: Reibplatte
- 30: Reibkopf
- 31: Reibungsplatte
- 32: Biegefeder

- A: Auslenkungsrichtung der Aktuatoren
- B: Bewegungsrichtung des Antriebselements
- F: Führungsrichtung Läufer gegenüber Stator
- R1,R2: Rotatorische Bewegungsrichtungen
- T1,T2: Translatorische Bewegungsrichtungen

## Patentansprüche

1. Ein 2-dimensional bewegbarer Linear- oder Rotationstisch (20) mit einem Stator (21) und mindestens einer oberen Läuferplatte, die gegenüber dem Stator (21) in zwei unabhängigen translatorischen Richtungen (T1,T2) oder zwei unabhängigen rotatorischen Richtungen (R1,R2) bewegbar ist, sowie mindestens zwei piezoelektrischen Linearantrieben (1), um die obere Läuferplatte (23) in den zwei translatorischen Richtungen (T1,T2) oder zwei rotatorischen Richtungen (R1,R2) zu bewegen,
wobei eine mittlere Läuferplatte (22) vorgesehen ist, wobei die mittlere Läuferplatte (22) zwischen dem Stator (21) und der oberen Läuferplatte (23) angeordnet ist, und wobei die mindestens zwei piezoelektrischen Linearantriebe (1) jeweils an dem Stator (21) befestigt sind, um die obere Läuferplatte (23) in den zwei translatorischen Richtungen (T1,T2) oder zwei rotatorischen Richtungen (R1,R2) zu bewegen,
**dadurch gekennzeichnet, dass** mindestens ein am Stator (21) befestigter piezoelektrischer Linearantrieb (1) durch eine Öffnung (24) in der mittleren Läuferplatte (22) hindurch mit der oberen Läuferplatte (23) in Kontakt steht, um die obere Läuferplatte (23) in einer ersten translatorischen Richtung (T1) oder einer ersten rotatorischen Richtung (R1) zu bewegen.

2. Der 2-dimensional bewegbare Linear- oder Rotationstisch (20) nach Anspruch 1, **dadurch gekennzeichnet, dass** die mindestens zwei am Stator (21) befestigten piezoelektrischen Linearantriebe (1) in einem Winkel zueinander angeordnet sind, bevorzugt in einem Winkel von 90° zueinander angeordnet sind.

3. Der 2-dimensional bewegbare Linear- oder Rotationstisch (20) nach Anspruch 1 oder 2, **dadurch gekennzeichnet, dass** mindestens eine Führung (25) der oberen Läuferplatte (23) vorgesehen ist, um die obere Läuferplatte (23) relativ zu dem Stator (21) in mindestens einer, bevorzugt zwei translatorischen Richtungen (T1,T2) oder rotatorischen Richtung (R1,R2) zu führen.

4. Der 2-dimensional bewegbare Linear- oder Rotationstisch (20) nach Anspruch 3,
**dadurch gekennzeichnet, dass** zwischen dem Stator (21) und der mittleren Läuferplatte (22) und zwischen der mittleren Läuferplatte (22) und der oberen Läuferplatte (23) jeweils eine Führung (25) vorgesehen ist.

5. Der 2-dimensional bewegbare Linear- oder Rotationstisch (20) nach Anspruch 4,
**dadurch gekennzeichnet, dass** die Führung (25) zwischen dem Stator (21) und der mittleren Läuferplatte (22) und/oder die Führung (25) zwischen der mittleren Läuferplatte (22) und der oberen Läuferplatte (23) als Führungsschienen (26) ausgebildet sind, wobei die Führungsschienen (26) bevorzugt jeweils an zwei gegenüberliegenden Seiten des Stators (21) und/oder der mittleren Läuferplatte (22) bzw. der mittleren Läuferplatte (23) und/oder der oberen Läuferplatte (23) vorgesehen sind.

6. Der 2-dimensional bewegbare Linear- oder Rotationstisch (20) nach Anspruch 1 bis 5, **dadurch gekennzeichnet, dass** die obere Läuferplatte (23) und/oder die mittlere Läuferplatte (22) eine federnde Kraftaufnahmeeinrichtung (16) zur Aufnahme einer Antriebskraft der piezoelektrischen Linearantriebe (1) aufweist.

7. Der 2-dimensional bewegbare Linear- oder Rotationstisch (20) nach Anspruch 1 bis 6, **dadurch gekennzeichnet, dass** die mindestens zwei piezoelektrischen Linearantriebe (1) als mindestens zwei piezoelektrische Reibkontaktantriebe ausgebildet sind.

8. Der 2-dimensional bewegbare Linear- oder Rotationstisch (20) nach Anspruch 7,
**dadurch gekennzeichnet, dass** die mindestens zwei piezoelektrischen Reibkontaktantriebe jeweils mindestens ein als Friktionselement ausgebildetes Antriebselement (4) aufweisen, wobei die Friktionselemente derart angeordnet sind, dass sie mit der oberen Läuferplatte (23) oder mit der mittleren Läuferplatte (22) und der oberen Läuferplatte (23) in Reibkontakt stehen, um die obere Läuferplatte (23) in den zwei translatorischen Richtungen (T1,T2) oder zwei rotatorischen Richtungen (R1,R2) zu bewegen.

9. Der 2-dimensional bewegbare Linear- oder Rotationstisch (20) nach Anspruch 1 bis 8,
**dadurch gekennzeichnet, dass** die mindestens zwei piezoelektrischen Linearantriebe (1) als mindestens zwei gekapselte piezoelektrische Linearantriebe (1) ausgebildet sind, insbesondere als gekapselte piezoelektrische Trägheits- oder Resonanzantriebe ausgebildet sind, und ein Gehäuse (2), mindestens zwei innerhalb des Gehäuses (2) angeordnete und ein elektromechanisches Material aufweisende Aktuatoren (3), die derart angeordnet sind, dass sie weils bei Anregung mit einer elektrischen Steuerspannung eine Auslenkung erzeugen, und ein außerhalb des Gehäuses (2) angeordnetes Antriebselement (4) aufweisen, wobei ein elastischer Wandabschnitt (2c) des Gehäuses (2), der durch die Auslenkung der Aktuatoren (3) elastisch verformt wird, die Aktuatoren (3) und das Antriebselement (4) derart miteinander koppelt, dass das Antriebselement (4) durch die Auslenkung der Aktuatoren (3) in Bewegung versetzt wird.

10. Der 2-dimensional bewegbare Linear- oder Rotationstisch (20) nach Anspruch 9,
**dadurch gekennzeichnet, dass** das Gehäuse (2) aus zwei oder mehr Gehäuseteilen (2a, 2b) besteht, wobei die Gehäuseteile (2a, 2b) vorzugsweise unter Zwischenschaltung wenigstens eines Dichtungselements (7) miteinander verbunden sind, insbesondere hermetisch dicht miteinander verbunden sind, wobei das Dichtungselement (7) bevorzugt aus Epoxidharz, einem Klebstoff oder einem gummielastischen Material besteht.

11. Der 2-dimensional bewegbare Linear- oder Rotationstisch (20) nach Anspruch 10,
**dadurch gekennzeichnet, dass** ein erstes Gehäuseteil als eine vorzugsweise ebene Platte (2a) und ein zweites Gehäuseteil als ein durch die ebene Platte (2a) verschließbarer, offener Hohlkörper (2b) mit einer Kavität zur Aufnahme der Aktuatoren (3) ausgebildet ist, wobei vorzugsweise der offene Hohlkörper (2b) den elastischen Wandabschnitt (2c), der in einem geschlossenen Zustand des Gehäuses (2) parallel zum ersten Gehäuseteil ausgerichtet ist, umfasst.

12. Der 2-dimensional bewegbare Linear- oder Rotationstisch (20) nach Anspruch 8 bis 11, **dadurch gekennzeichnet, dass** die gekapselten piezoelektrischen Linearantriebe (1) (1) eine elektrische Leiterstruktur (6) mit gehäuseinnenseitigen Anschlussstellen (6a) und gehäuseaußenseitigen Anschlussstellen (6b) aufweisen, die durch Leiterbahnen (6c) verbunden sind, wobei die Aktuatoren (3) an die gehäuseinnenseitigen Anschlussstellen (6a) elektrisch angeschlossen sind, vorzugsweise durch elektrisch leitenden Klebstoff, wobei die gehäuseaußenseitigen Anschlussstellen (6b) bevorzugt zum Anschluss an eine Steuereinrichtung zur Ansteuerung der Aktuatoren (3) ausgebildet sind.

13. Der 2-dimensional bewegbare Linear- oder Rotationstisch (20) nach Anspruch 12,
**dadurch gekennzeichnet, dass** sich die gehäuseinnenseitigen Anschlussstellen (6a), die gehäuseaußenseitigen Anschlussstellen (6b) und die Leiterbahnen (6c) in derselben Ebene erstrecken, vorzugsweise auf einer dem zweiten Gehäuseteil (2b) zugewandten Seite des ersten Gehäuseteils (2a).

14. Der 2-dimensional bewegbare Linear- oder Rotationstisch (20) nach Anspruch 8 bis 13, **dadurch gekennzeichnet, dass** die gekapselten piezoelektrischen Linearantriebe (1) (1) einen Träger (5a) und eine das Gehäuse (2) gegen den Träger (5a) drängende Federeinrichtung (5b) aufweisen, wobei das Antriebselement (4) vorzugsweise auf der Federeinrichtung (5b) angeordnet ist.

15. Der 2-dimensional bewegbare Linear- oder Rotationstisch (20) nach Anspruch 14,
**dadurch gekennzeichnet, dass** der Träger (5a) und die Federeinrichtung (5b) einen das Gehäuse (2) umschließenden Rahmen (5) ausbilden, wobei die Federeinrichtung (5b) vorzugsweise als eine das Gehäuse (2) überspannendes Federelement (5a) ausgebildet ist.

16. Verfahren zum Bewegen eines 2-dimensional bewegbaren Linear- oder Rotationstischs (20), der Linear- oder Rotationstisch (20) umfassend einen Stator (21), mindestens eine obere Läuferplatte (23), die sich gegenüber dem Stator (21) in zwei unabhängigen translatorischen Richtungen (T1,T2) oder zwei unabhängigen rotatorischen Richtungen (R1,R2) bewegt, eine mittlere Läuferplatte (22) die zwischen dem Stator (21) und der oberen Läuferplatte (23) angeordnet ist, sowie mindestens zwei, bevorzugt vier, an dem Stator (21) befestigte piezoelektrische Linearantriebe (1), um die obere Läuferplatte (23) in den zwei translatorischen Richtungen (T1,T2) oder zwei rotatorischen Richtungen (R1,R2) zu bewegen, wobei mindestens ein am Stator (21) befestigter piezoelektrischer Linearantrieb (1) durch eine Öffnung (24) in der mittleren Läuferplatte (22) hindurch mit der oberen Läuferplatte (23) in Kontakt steht und die obere Läuferplatte (23) in einer ersten translatorischen Richtung (T1) oder einer ersten rotatorischen Richtung (R1) bewegt, und wobei für das Bewegen der oberen Läuferplatte (23) in einer oder in beiden unabhängigen translatorischen Richtungen (T1,T2) bzw. in einer oder in beiden unabhängigen rotatorischen Richtungen (R1,R2) die einzelnen Bewegungsbeiträge aller am Stator (21) befestigter piezoelektrischer Linearantriebe (1) addiert oder subtrahiert werden.

17. Verfahren nach Anspruch 16, wobei die mindestens zwei, bevorzugt vier, an dem Stator (21) befestigten piezoelektrischen Linearantriebe (1) in einem Winkel, bevorzugt in einem Winkel von 45°, zu den zwei translatorischen Richtungen (T1,T2) oder zu den Projektionen der zwei rotatorischen Richtungen (R1,R2) geneigt sind, und wobei für das Bewegen der oberen Läuferplatte (23) in einer der unabhängigen translatorischen Richtungen (T1,T2) bzw. in einer der unabhängigen rotatorischen Richtungen (R1,R2) alle am Stator (21) befestigten piezoelektrischen Linearantriebe (1) einen substantiellen positiven oder negativen Bewegungsbeitrag liefern.

18. Verfahren nach Anspruch 16, wobei die mindestens zwei, bevorzugt vier, an dem Stator (21) befestigten piezoelektrischen Linearantriebe (1) parallel zu den zwei translatorischen Richtungen (T1,T2) oder zu den Projektionen der zwei rotatorischen Richtungen (R1,R2) angeordnet sind, und wobei die mindestens zwei Aktuatoren (3) mindestens eines piezoelektrischen Linearantriebs (1), der für das Bewegen der oberen Läuferplatte (23) in einer der unabhängigen translatorischen Richtungen (T1,T2) bzw. in einer der unabhängigen rotatorischen Richtungen (R1,R2) keinen Bewegungsbeitrag liefert, mit einem gleichen Spannungssignal, bevorzugt einem sinusförmigen oder sägezahnförmigen Spannungssignal angesteuert werden, um die Reibungshemmung zwischen dem Antriebselement (4) dieser piezoelektrischen Linearantriebs (1) und der oberen Läuferplatte (23) zu reduzieren.

## Claims

1. A linear or rotary table (20) movable in two dimensions having a stator (21) and at least one upper slider plate movable relative to the stator (21) in two independent translational directions (T1,T2) or two independent rotary directions (R1,R2), and at least two piezoelectric linear drives (1) for moving the upper slider plate (23) in the two translational directions (T1,T2) or two rotary directions (R1,R2), wherein a central slider plate (22) is provided, the central slider plate (22) is arranged between the stator (21) and the upper slider plate (23), and wherein the at least two piezoelectric linear drives (1) are each attached to the stator (21) to move the upper slider plate (23) in the two translational directions (T1, T2) or two rotary directions (R1,R2),
**characterized in that** at least one piezoelectric linear drive (1) attached to the stator (21) is in contact with the upper slider plate (23) through an opening (24) in the central slider plate (22) to move the upper slider plate (23) in a first translational direction (T1) or a first rotary direction (R1).

2. The linear or rotary table (20) movable in two dimensions according to claim 1,
**characterized in that** the at least two piezoelectric linear drives (1) attached to the stator (21) are arranged at an angle to each other, preferably at an angle of 90° to each other.

3. The linear or rotary table (20) movable in two dimensions according to claims 1 or 2,
**characterized in that** at least one guide (25) for the upper slider plate (23) is provided to guide the upper slider plate (23) relative to the stator (21) in at least one, preferably two translational directions (T1,T2) or rotary directions (R1,R2).

4. The linear or rotary table (20) movable in two dimensions according to claim 3,
**characterized in that** a guide (25) is provided between the stator (21) and the central slider plate (22) and between the central slider plate (22) and the upper slider plate (23), respectively.

5. The linear or rotary table (20) movable in two dimensions according to claim 4,
**characterized in that** the guide (25) between the stator (21) and the central slider plate (22) and/or the guide (25) between the central slider plate (22) and the upper slider plate (23) are configured as guide rails (26), wherein the guide rails (26) are preferably provided each on two opposite sides of the stator (21) and/or the central slider plate (22) and/or respectively of the central slider plate (23) and/or the upper slider plate (23).

6. The linear or rotary table (20) movable in two dimensions according to claims 1 to 5,
**characterized in that** the upper slider plate (23) and/or the central slider plate (22) has a resilient force absorbing device (16) for absorbing a driving force of the piezoelectric linear drives (1).

7. The linear or rotary table (20) movable in two dimensions according to claims 1 to 6,
**characterized in that** the at least two piezoelectric linear drives (1) are configured as at least two piezoelectric frictional contact actuators.

8. The linear or rotary table (20) movable in two dimensions according to claim 7,
**characterized in that** the at least two piezoelectric frictional contact actuators each have at least one actuating element (4) configured as a friction element, wherein the friction elements are arranged such to be in frictional contact with the upper slider plate (23) or with the central slider plate (22) and the upper slider plate (23) in order to move the upper slider plate (23) in the two translational directions (T1,T2) or two rotary directions (R1,R2).

9. The linear or rotary table (20) movable in two dimensions according to claims 1 to 8,
**characterized in that** the at least two piezoelectric linear drives (1) are configured as at least two encapsulated piezoelectric linear drives (1), in particular configured as encapsulated piezoelectric inertial or resonance drives, and having a housing (2), at least two actuators (3) arranged within the housing (2) and comprising an electromechanical material, the actuators (3) arranged such that each generates a deflection when excited by an electric control voltage, and a driving element (4) arranged outside the housing (2), wherein an elastic wall portion (2c) of the housing (2), which is elastically deformed by the deflection of the actuators (3), couples the actuators (3) and the driving element (4) to each other in such a way, that the driving element (4) is set in motion by the deflection of the actuators (3).

10. The linear or rotary table (20) movable in two dimensions according to claim 9,
**characterized in that** the housing (2) consists of two or more housing parts (2a, 2b), wherein the housing parts (2a, 2b) are preferably connected to one another with the interposition of at least one sealing element (7), in particular are connected to one another in a hermetically sealed manner, wherein the sealing element (7) preferably consists of epoxy resin, an adhesive or a rubber-elastic material.

11. The linear or rotary table (20) movable in two dimensions according to claim 10,
**characterized in that** a first housing part is configured as a preferably planar plate (2a) and a second housing part is configured as an open hollow body (2b) closable by the planar plate (2a) and having a cavity for receiving the actuators (3), wherein preferably the open hollow body (2b) comprises the elastic wall portion (2c), which is aligned parallel to the first housing part in a closed state of the housing (2).

12. The linear or rotary table (20) movable in two dimensions according to claims 8 to 11,
**characterized in that** the encapsulated piezoelectric linear drives (1) (1) have an electrical conductor structure (6) having inside housing connection points (6a) and outside housing connection points (6b), which are connected by conductor paths (6c), wherein the actuators (3) are electrically connected to the inside housing connection points (6a), preferably by an electrically conductive adhesive, and wherein the outside housing connection points (6b) are preferably configured for connection to a control device for controlling the actuators (3).

13. The linear or rotary table (20) movable in two dimensions according to claim 12,
**characterized in that** the inside housing connection points (6a), the outside housing connection points (6b) and the conductor paths (6c) extend in the same plane, preferably on a side of the first housing part (2a) facing the second housing part (2b).

14. The linear or rotary table (20) movable in two dimensions according to claims 8 to 13,
**characterized in that** the encapsulated piezoelectric linear drives (1) (1) comprise a support (5a) and a spring means (5b) urging the housing (2) against the support (5a), wherein the actuating element (4) is preferably arranged on the spring means (5b).

15. The linear or rotary table (20) movable in two dimensions according to claim 14,
**characterized in that** the support (5a) and the spring means (5b) form a frame (5) enclosing the housing (2), wherein the spring means (5b) is preferably configured as a spring element (5a) spanning the housing (2).

16. A method for moving a linear or rotary table (20) movable in two dimensions, the linear or rotary table (20) comprising:
a stator (21),
at least one upper slider plate (23) which can move relative to the stator (21) in two independent translational directions (T1, T2) or two independent rotary directions (R1, R2),
a central slider plate (22) arranged between the stator (21) and the upper slider plate (23), and
at least two, preferably four, piezoelectric linear drives (1) attached to the stator (21), for moving the upper slider plate (23) in the two translational directions (T1,T2) or two rotary directions (R1,R2),
wherein at least one piezoelectric linear drive (1) attached to the stator (21) is in contact with the upper slider plate (23) through an opening (24) in the central slider plate (22) and moves the upper slider plate (23) in a first translational direction (T1) or a first rotary direction (R1), and
wherein for moving the upper slider plate (23) in one or both independent translational directions (T1,T2), or respectively in one or both independent rotary directions (R1,R2), the individual motion contributions of all piezoelectric linear drives (1) attached to the stator (21) are added or subtracted.

17. The method according to claim 16, wherein the at least two, preferably four, piezoelectric linear drives (1) attached to the stator (21) are inclined at an angle, preferably at an angle of 45°, to the two translational directions (T1,T2) or to the projections of the two rotational directions (R1,R2), and wherein for moving the upper slider plate (23) in one of the independent translational directions (T1,T2), or respectively in one of the independent rotary directions (R1,R2), all piezoelectric linear drives (1) attached to the stator (21) provide a substantial positive or negative motion contribution.

18. The method according to claim 16, wherein the at least two, preferably four, piezoelectric linear drives (1) attached to the stator (21) are arranged parallel to the two translational directions (T1,T2) or to the projections of the two rotational directions (R1,R2), and wherein the at least two actuators (3) of at least one piezoelectric linear drive (1), which does not provide a motion contribution for moving the upper slider plate (23) in one of the independent translational directions (T1,T2), respectively in one of the independent rotary directions (R1,R2), are controlled having the same voltage signal, preferably a sinusoidal or sawtooth voltage signal, in order to reduce the friction inhibition between the actuating element (4) of this piezoelectric linear drive (1) and the upper slider plate (23).

## Revendications

1. Table linéaire ou rotative à mouvement bidimensionnel (20) comprenant un stator (21) et au moins une plaque de rotor supérieure par rapport au stator (21) dans deux directions de translation indépendantes (T1, T2) ou deux directions de rotation indépendantes (R1, R2), et au moins deux entraînements linéaires piézoélectriques (1) pour déplacer la plaque de rotor supérieure (23) dans les deux directions de translation (T1, T2) ou les deux directions de rotation (R1, R2),
dans laquelle une plaque de rotor centrale (22) est prévue, dans laquelle la plaque de rotor centrale (22) est disposée entre le stator (21) et la plaque de rotor supérieure (23), et dans laquelle les au moins deux entraînements linéaires piézoélectriques (1) sont respectivement fixés au stator (21) pour déplacer la plaque de rotor supérieure (23) dans les deux directions de translation (T1, T2) ou les deux directions de rotation (R1, R2), **caractérisée en ce qu'**au moins un entraînement linéaire piézoélectrique (1) fixé au stator (21) est en contact avec la plaque de rotor supérieure (23) à travers une ouverture (24) dans la plaque de rotor centrale (22) pour déplacer la plaque de rotor supérieure (23) dans une première direction de translation (T1) ou une première direction de rotation (R1).

2. Table linéaire ou rotative à mouvement bidimensionnel (20) selon la revendication 1,
**caractérisée en ce que** les au moins deux entraînements linéaires piézoélectriques (1) fixés au stator (21) sont disposés selon un angle l'un par rapport à l'autre, de préférence selon un angle de 90° l'un par rapport à l'autre.

3. Table linéaire ou rotative à mouvement bidimensionnel (20) selon la revendication 1 ou 2,
**caractérisée en ce qu'**au moins un guide (25) de la plaque de rotor supérieure (23) est prévu pour guider la plaque de rotor supérieure (23) par rapport au stator (21) dans au moins une, de préférence deux directions de translation (T1, T2) ou deux directions de rotation (R1, R2) .

4. Table linéaire ou rotative à mouvement bidimensionnel (20) selon la revendication 3,
**caractérisée en ce qu'**un guide (25) est respectivement prévu entre le stator (21) et la plaque de rotor centrale (22) et entre la plaque de rotor centrale (22) et la plaque de rotor supérieure (23).

5. Table linéaire ou rotative à mouvement bidimensionnel (20) selon la revendication 4,
**caractérisée en ce que** le guidage (25) entre le stator (21) et la plaque de rotor centrale (22) et/ou le guidage (25) entre la plaque de rotor centrale (22) et la plaque de rotor supérieure (23) sont conçus comme des rails de guidage (26), les rails de guidage (26) étant de préférence prévus respectivement sur deux côtés opposés du stator (21) et/ou de la plaque de rotor centrale (22) ou de la plaque de rotor centrale (23) et/ou de la plaque de rotor supérieure (23).

6. Table linéaire ou rotative à mouvement bidimensionnel (20) selon les revendications 1 à 5,
**caractérisée en ce que** la plaque de rotor supérieure (23) et/ou la plaque de rotor centrale (22) comprend un dispositif d'absorption de force élastique (16) pour absorber une force d'entraînement des entraînements linéaires piézoélectriques (1).

7. Table linéaire ou rotative à mouvement bidimensionnel (20) selon les revendications 1 à 6,
**caractérisée en ce que** les au moins deux entraînements linéaires piézoélectriques (1) sont conçus comme au moins deux entraînements piézoélectriques à contact par friction.

8. Table linéaire ou rotative à mouvement bidimensionnel (20) selon la revendication 7,
**caractérisée en ce que** les au moins deux entraînements piézoélectriques à contact par friction présentent chacun au moins un élément d'entraînement (4) réalisé sous forme d'élément de friction, les éléments de friction F étant disposés de telle sorte qu'ils sont en contact par friction avec la plaque de rotor supérieure (23) ou avec la plaque de rotor centrale (22) et la plaque de rotor supérieure (23), afin de déplacer la plaque de rotor supérieure (23) dans les deux directions de translation (T1, T2) ou les deux directions de rotation (R1, R2).

9. Table linéaire ou rotative à mouvement bidimensionnel (20) selon les revendications 1 à 8,
**caractérisée en ce que** les au moins deux entraînements linéaires piézoélectriques (1) sont conçus comme au moins deux entraînements linéaires piézoélectriques encapsulés (1), en particulier comme des entraînements piézoélectriques encapsulés à inertie ou à résonance, et un boîtier (2), au moins deux actionneurs (3) disposés à l'intérieur du boîtier (2) et présentant un matériau électromécanique, qui sont disposés de telle manière, qu'ils produisent chacun une déviation lors de l'excitation par une tension de commande électrique, et un élément d'entraînement (4) disposé à l'extérieur du boîtier (2), une section de paroi élastique (2c) du boîtier (2), qui est élastiquement déformée par la déviation des actionneurs (3), accouplant les actionneurs (3) et l'élément d'entraînement (4) de telle sorte que l'élément d'entraînement (4) est mis en mouvement par la déviation des actionneurs (3).

10. Table linéaire ou rotative à mouvement bidimensionnel (20) selon la revendication 9,
**caractérisée en ce que** le boîtier (2) est constitué de deux ou plusieurs parties de boîtier (2a, 2b), les parties de boîtier (2a, 2b) étant reliées entre elles de préférence par l'interposition d'au moins un élément d'étanchéité (7), en particulier étant reliées entre elles de manière hermétiquement étanche, l'élément d'étanchéité (7) étant constitué de préférence de résine époxy, d'une colle ou d'un matériau élastique en caoutchouc.

11. Table linéaire ou rotative à mouvement bidimensionnel (20) selon la revendication 10,
**caractérisée en ce qu'**une première partie du boîtier est réalisée sous la forme d'une plaque (2a) de préférence plane et qu'une deuxième partie du boîtier est réalisée sous la forme d'un corps creux (2b) ouvert pouvant être fermé par la plaque plane (2a) et comportant une cavité destinée à recevoir les actionneurs (3), le corps creux ouvert (2b) comprenant de préférence la section de paroi élastique (2c) qui, dans un état fermé du boîtier (2), est orientée parallèlement à la première partie du boîtier.

12. Table linéaire ou rotative à mouvement bidimensionnel (20) selon les revendications 8 à 11,
**caractérisée en ce que** les entraînements linéaires piézoélectriques encapsulés (1) (1) présentent une structure conductrice électrique (6) avec des points de raccordement (6a) côté intérieur du boîtier et des points de raccordement (6b) côté extérieur du boîtier, qui sont reliés par des pistes conductrices (6c), les actionneurs (3) étant raccordés électriquement aux points de raccordement (6a) situés à l'intérieur du boîtier, de préférence au moyen d'une colle conduisant l'électricité, les points de raccordement (6b) situés à l'extérieur du boîtier étant conçus de préférence pour le raccordement à un dispositif de commande pour la commande des actionneurs (3).

13. Table linéaire ou rotative à mouvement bidimensionnel (20) selon la revendication 12,
**caractérisée en ce que** les points de connexion (6a) côté intérieur du boîtier, les points de connexion (6b) côté extérieur du boîtier et les pistes conductrices (6c) s'étendent dans le même plan, de préférence sur un côté de la première partie du boîtier (2a) tourné vers la deuxième partie du boîtier (2b).

14. Table linéaire ou rotative à mouvement bidimensionnel (20) selon les revendications 8 à 13,
**caractérisée en ce que** les entraînements linéaires piézoélectriques encapsulés (1) (1) présentent un support (5a) et un dispositif à ressort (5b) poussant le boîtier (2) contre le support (5a), l'élément d'entraînement (4) étant de préférence disposé sur le dispositif à ressort (5b).

15. Table linéaire ou rotative à mouvement bidimensionnel (20) selon la revendication 14,
**caractérisée en ce que** le support (5a) et le dispositif à ressort (5b) forment un cadre (5) entourant le boîtier (2), le dispositif à ressort (5b) étant de préférence conçu comme un élément à ressort (5a) recouvrant le boîtier (2).

16. Procédé de déplacement d'une table linéaire ou rotative à mouvement bidimensionnel (20), la table linéaire ou rotative (20) comprenant un stator (21), au moins une plaque de rotor supérieure (23) qui se déplace par rapport au stator (21) dans deux directions de translation indépendantes (T1, T2) ou deux directions de rotation indépendantes (R1, R2), une plaque de rotor centrale (22) qui est disposée entre le stator (21) et la plaque de rotor supérieure (23), ainsi qu'au moins deux, de préférence quatre, entraînements linéaires piézoélectriques (1) fixés sur le stator (21), pour déplacer la plaque de rotor supérieure (23) dans les deux directions de translation (T1, T2) ou les deux directions de rotation (R1, R2), au moins un entraînement linéaire piézoélectrique (1) fixé au stator (21) étant en contact avec la plaque de rotor supérieure (23) à travers une ouverture (24) dans la plaque de rotor centrale (22) et déplaçant la plaque de rotor supérieure (23) dans une première direction de translation (T1) ou une première direction de rotation (R1), et dans lequel, pour le déplacement de la plaque de rotor supérieure (23) dans l'une des directions de translation indépendantes (T1, T2) ou dans les deux directions de translation indépendantes (T1, T2), ou dans les deux directions de translation indépendantes (T1, T2), respectivement, dans une ou dans les deux directions de rotation indépendantes (R1, R2), les contributions individuelles au mouvement de tous les entraînements linéaires piézoélectriques (1) fixés au stator (21) sont additionnées ou soustraites.

17. Procédé selon la revendication 16, dans lequel les au moins deux, de préférence quatre, entraînements linéaires piézoélectriques (1) fixés au stator (21) sont inclinés d'un angle, de préférence d'un angle de 45°, par rapport aux deux directions de translation (T1, T2) ou aux projections des deux directions de rotation (R1, R2), et dans lequel, pour le déplacement de la plaque de rotor supérieure (23) dans l'une des directions de translation indépendantes (T1, T2) ou, respectivement, dans l'une des directions de rotation indépendantes (R1, R2), le mouvement est positif ou négatif, dans l'une des directions de rotation indépendantes (R1, R2), tous les entraînements linéaires piézoélectriques (1) fixés au stator (21) fournissent une contribution positive ou négative substantielle au mouvement.

18. Procédé selon la revendication 16, dans lequel les au moins deux, de préférence quatre, entraînements linéaires piézoélectriques (1) fixés au stator (21) sont disposés parallèlement aux deux directions de translation (T1, T2) ou aux projections des deux directions de rotation (R1, R2), et dans lequel les au moins deux actionneurs (3) d'au moins un entraînement linéaire piézoélectrique (1), qui ne contribue pas aux déplacement de la plaque de rotor supérieure (23) dans l'une des directions de translation indépendantes (T1, T2) ou respectivement, dans l'une des directions de rotation indépendantes (R1, R2), sont commandés avec un même signal de tension, de préférence un signal de tension sinusoïdal ou en dents de scie, afin de réduire l'inhibition par frottement entre l'élément d'entraînement (4) de cet entraînement linéaire piézoélectrique (1) et la plaque de rotor supérieure (23).
